# EUROPÄISCHE PATENTSCHRIFT

(11) **EP 0 776 913 B1**
(45) Veröffentlichungstag und Bekanntmachung des Hinweises auf die Patenterteilung: **04.02.2004**
(21) Anmeldenummer: 96118856.2
(22) Anmeldetag: 26.11.1996
(51) Int. Cl.: C08F 210/00, C08F 210/06, C08F 4/62

(54) **Hochmolekulare Copolymere**
High molecular weight copolymers
Copolymères de haut poids moléculaire

(30) Priorität: 01.12.1995 DE 19544828
(43) Veröffentlichungstag der Anmeldung: 04.06.1997
(60) Teilanmeldung: 02019624.2
(73) Patentinhaber: Basell Polyolefine GmbH, 50389 Wesseling (DE)
(72) Erfinder: Winter, Andreas, Dr., 61479 Glashütten (DE); Küber, Frank, Dr., 61440 Oberursel (DE); Bachmann, Bernd, Dr., 65817 Eppstein (DE)

(56) Entgegenhaltungen:
- EP-A- 0 251 771
- EP-A- 0 347 129
- EP-A- 0 576 970
- EP-A- 0 629 632
- EP-A- 0 634 441
- EP-A- 0 646 604
- EP-A- 0 661 300
- EP-A- 0 718 324
- KAMINSKY: "olefinpolymerisation mittels metallocenkatylasatoren" ANGEWANDTE MAKROMOLEKULARE CHEMIE APPLIED MACROMOLECULAR CHEMISTRY AND PHYSICS, Bd. 223, 1994, Seiten 101-120, XP000482388
- SPALECK: "stereospecific metallocene catalysts" MACROMOLECULAR SYMPOSIA, Bd. 89, Januar 1995, Seiten 237-247, XP000509170
- DATABASE WPI Section Ch, Week 8501 Derwent Publications Ltd., London, GB; Class A17, AN 85-003930 XP002067751 & JP 59 204 646 A (JAPAN SYNTHETIC RUBBER CO LTD)

## Beschreibung

Die vorliegende Erfindung betrifft ein Metallocenkatalysatorsystem zur Herstellung von hochmolekularen Copolymeren sowie ein wirtschaftliches und umweltfreundliches Verfahren zu ihrer Herstellung.

Bei der Copolymerisation von Olefinen können je nach Verfahrensweise statistische Copolymere mit einem geringen Gehalt an Comonomeren, Copolymere, statistisch oder blockartig aufgebaut, die einen höheren Einbau an Comonomeren als die statistischen Copolymeren enthalten oder Copolymer-Kautschuks mit einem Comonomerengehalt von deutlich über 20 Gew.-% bezogen auf das Gesamtpolymer erhalten werden. Die Copolymere weisen unterschiedliche Eigenschaften und unterschiedliche Gehalte an Comonomeren auf. Statistische Copolymere unterscheiden sich von den entsprechenden Homopolymeren in der Regel durch eine geringere Kristallinität, einen niedrigeren Schmelzpunkt und eine geringere Härte. Gefordert wird für die statistischen Copolymere ein möglichst statistischer Kettenaufbau. Die in der Technik bekannten Olefin-Copolymeren, die mit Hilfe heterogener Ziegler Katalysatoren hergestellt werden, können diese Forderung nur sehr begrenzt erfüllen.

In EP-A-263 718 sind statistische Terpolymere aus C₂/C₃/Cₙ mit n > 3 beschrieben, welche mittels heterogener Ziegler Katalysatoren erhalten werden. Der C₃-Gehalt beträgt 97 bis 86 Mol.-%, der C₂-Gehalt 0,5 bis 6 % und der Cₙ-Gehalt (n > 3) 2 bis 13 Mol.-%. Das Material besitzt gute Heißsiegeleigenschaften, wird aber in einem zweistufigen Verfahren mit einem Suspensions- und einem Gasphasenpolymerisationsschritt erhalten. Um die gewünschten Anti-Blocking-Eigenschaften zu erlangen, muß ein Terpolymer mit einem hohen Anteil an Fremdmonomer hergestellt werden. Erwünscht sind jedoch Bipolymere, da diese einfacher zu handhaben sind und einen chemisch einheitlicheren Kettenaufbau aufweisen.

Aus EP-A-74 194 sind statistische C₂/C₃-Copolymere bekannt, die im Suspensionsverfahren hergestellt werden. Um das gewünschte Eigenschaftsbild zu erhalten, müssen die erhaltenen Polymeren abgebaut werden. Ein hoher C₂-Anteil wird benötigt, um die chemische Uneinheitlichkeit eines heterogenen Katalysator-Systems zu mildern. Die Uneinheitlichkeit führt zu einem höheren Anteil an niedermolekularen, leichtlöslichen, hochethylenhaltingen Anteilen im Polymeren und somit zu eingeschränkter Anwendbarkeit im Bereich Lebensmittelverpackung.

Aus JP-A 62-212 707 ist ein Ethylen/Propylen-Copolymer mit hohem Ethylengehalt und ein Verfahren zu seiner Herstellung bekannt. Das Verfahren wird unter Verwendung von Ethylen-bisindenyl-zirkondichlorid bei einer Temperatur von weniger als -10°C durchgeführt und kommt somit für die industrielle Fertigung nicht in Frage. Außerdem ist die Aktivität des Katalysators sehr gering.

Aus EP-A 485 822 ist bekannt für die Herstellung von Copolymeren in 2-Stellung am Indenylliganden substituierte Metallocene zu verwenden. In EP-A-0 629 632 und EF-A-0 576 970 ist beschrieben, in 2- und 4-Stellung am Indenylliganden substituierte Metallocene einzusetzen. Diesen bereits sehr leistungsfähigen Systemen ist gemein, daß mit ihnen ein guter statistischer Comonomereneinbau realisiert werden kann, daß mit ihnen aber kein hochmolekulares Copolymer hergestellt werden kann, wenn gleichzeitig ein höherer Ethylengehalt angestrebt wird. Statistische Copolymere mit höheren Ethylengehalten sind besonders in Einsatzgebieten bevorzugt, in denen eine hohe Molmasse erforderlich ist. Das trifft insbesondere im Bereich der Tiefziehanwendungen, des Blasformens und bei Folien für den Verpackungsbereich zu. Siegelschichtfolien sind hier besonders zu nennen. Darüber hinaus ist ein geringer extrahierbarer Anteil besonders im Bereich der Lebensmittelverpackungen notwenig. Dies können bei höherem Comonomereneinbau nur Copolymerformmasse mit höherem Molekulargewicht erfüllen.

Höhere Transparenzen sind ebenfalls gefragt. Dazu ist ebenfalls ein relativ hoher Gehalt an Comonomer im Polymer erforderlich. Um hier eine gute Verarbeitbarkeit zu gewährleisten, sind ebenfalls höhere Molmassen erforderlich, als die, die mit den bekannten Metallocenen des Standes der Technik bei technisch relevanten Polymerisationstemperaturen von 60 bis 80°C realisierbar sind.

Die bisher besten bekannten Metallocene, nämlich Vertreter einer Gruppe mit in 2,4-Stellung substituierten Indenylliganden erfüllen dieses Molmassenziel mit VZ-Werten von etwa 300 cm³/g und Comonomerengehalten unter 2 Gew.-%, diese Comonomergehalte sind jedoch nicht ausreichend, um das Anforderungsprofil, das an gute Copolymere gestellt wird, zu erfüllen. Dazu sind höhere Comonomerengehalte notwendig, wobei bei den Polymeren, die mit diesen Metallocenen hergestellt werden, die Viskositätszahl (VZ) sehr schnell auf Werte von 200 cm³/g absinkt und somit zu tief liegt. Verarbeitbarkeit, Verwendbarkeit und Menge an niedermolekularen Anteilen liegen dann in einem Bereich, der eine sinnvolle Verwendung ausschließt.

Noch deutlicher werden die Defizite bei Copolymeren, die als Kautschuke bezeichnet werden. Sie enthalten deutlich mehr als 20 Gew.-%, bevorzugt 30 bis 60 Gew.-% α-Olefin Comonomer, eventuell noch bis zu 10 Gew.-% eines dritten α-Olefins oder Diens. Zur Zeit ist kein Metallocen bekannt, mit dem unter industriell realisierbaren Verfahrenstemperaturen (>50°C) eine solche Polymerformmasse erzeugt werden kann, deren VZ über 200 cm³/g liegt.

Der vorliegenden Erfindung liegt die Aufgabe zugrunde, eine Katalysatorkomponente und ein Katalysatorsystem zur Herstellung von hochmolekularen Copolymeren sowie ein wirtschaftliches und umweltfreundliches Verfahren zu ihrer Herstellung bereitzustellen.

Die der vorliegenden Erfindung zugrundeliegende Aufgabe wird durch eine Katalysatorkomponente zur Herstellung eines hochmolekularen Copolymeren gelöst, die eine Verbindung der allgemeinen Formel I ist, 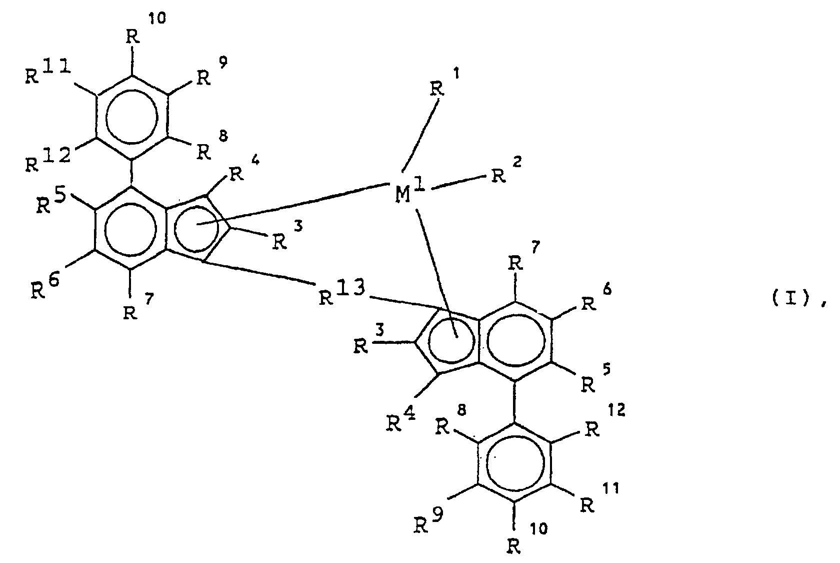 worin
M¹ ein Metall der Gruppe IVb, Vb oder Vlb des Periodensystems ist,
R¹ und R² gleich sind und eine C₁-C₄-Alkylgruppe
oder ein Halogenatom bedeuten,
die Reste R³ gleich oder verschieden sind und
eine C₁-C₄-Alkylgruppe
bedeuten, R⁴ und R⁷ Wasserstoff bedeuten, R⁵ und R⁶ verschieden sind und eine C₁-C₄-Alkylgruppe oder Wasserstoff bedeuten,
R⁸ bis R¹² gleich oder verschieden sind und die für R³ genannten Bedeutungen besitzen oder Wasserstoff sind, oder zwei oder mehr benachbarte Reste R⁸ bis R¹² mit den sie verbindenden Atomen einen oder
mehrere aromatische oder aliphatische Ringe bilden,
R¹³ 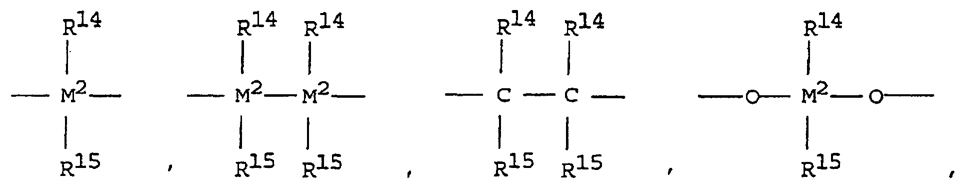 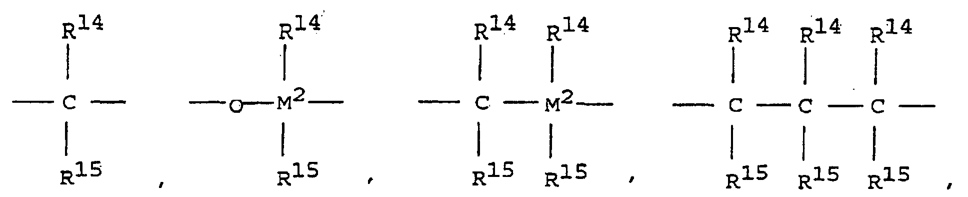 =BR¹⁴. =AlR¹⁴, -Ge-, -O-, -S-, =SO, =SO₂, =NR¹⁴, =CO, =PR¹⁴ oder =P(O)R¹⁴ ist, wobei R¹⁴ und R¹⁵ gleich oder verscheiden sind und ein Wasserstoffatom, ein Halogenatom, eine C₁-C₁₀-, insbesondere C₁-C₄-Alkylgruppe, eine C₁-C₁₀-Fluoralkyl-, insbesondere CF₃-Gruppe, eine C₆-C₁₀-, insbesondere C₆-C₈-Aryl-, eine C₆-C₁₀-Fluoraryl-, insbesondere Pentrafluorphenylgruppe, eine C₁-C₁₀-, insbesondere C₁-C₄-Alkoxygruppe, inbesondere Methoxygruppe, eine C₂-C₁₀-, insbesondere C₂-C₄-Alkenylgruppe, eine C₇-C₄₀-, insbesondere C₇-C₁₀-Arylalkylgruppe, eine C₈-C₄₀-, insbesondere C₈-C₁₂-Arylalkenylgruppe, eine C₇-C₄₀-, insbesondere C₇-C₁₂-Alkylarylgruppe bedeuten oder R¹⁴ und R¹⁵ jeweils mit den sie verbindenden Atomen einen Ring bilden und M² Silizium, Germanium oder Zinn ist.

Für Verbindungen der Formel gilt bevorzugt, daß M¹ Zirkonium oder Hafnium ist.

Besonders bevorzugt bilden zwei oder mehr benachbarte Reste R⁸, R⁹, R¹⁰, R¹¹ oder R¹² einen oder mehrere aromatische oder aliphatische Ringe.

Die Reste R³ sind gleich oder verschieden und eine C₁-C₁₀-Alkylgruppe, die halogeniert sein kann, eine C₁-C₁₀-Alkenylgruppe, die halogeniert sein kann, eine C₆-C₁₀-Arylgruppe, die halogeniert sein kann,

Die Reste R¹³ bedeuten bevorzugt 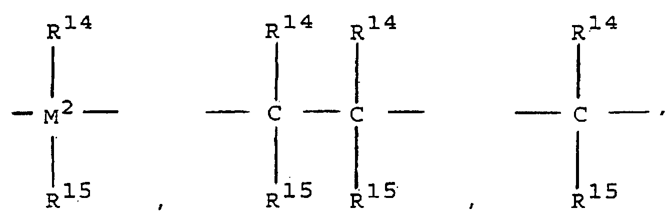 wobei M² Silizium oder Germanium ist und R¹⁴ und R¹⁵ gleich oder verschieden sind und eine C₁-C₄-Alkylgruppe oder eine C₆-C₁₀-Arylgruppe bedeuten.

R¹⁴ und R¹⁵ sind gleich oder verschieden und bedeuten bevorzugt eine C₁-C₄-Alkylgruppe, insbesondere Methylgruppe, CF₃-Gruppe, C₆-C₈-Aryl-, Pentrafluorphenylgruppe, C₁-C₁₀-, C₁-C₄-Alkoxygruppe, inbesondere Methoxygruppe; C₂-C₄-Alkenylgruppe, C₇-C₁₀-Arylalkylgruppe, C₈-C₁₂-Arylalkenylgruppe, C₇-C₁₂-Alkylarylgruppe.

Besonders bevorzugt sind Verbindungen der Formel I, bei denen M² Zirkon ist, R¹ und R² gleich sind und Chlor oder eine Methylgruppe bedeuten, die Reste R³ gleich sind und eine Methyl- oder Ethylgruppe bedeuten, mindestens zwei der Reste R⁸, R⁹, R¹⁰, R¹¹ oder
R¹² von Wasserstoff verschieden sind und mindestens einen aromatischen Ring bilden, der bevorzugt 6-gliedrig ist, oder wenn die Reste R⁸, R⁹, R¹⁰, R¹¹ oder R¹² Wasserstoff sind, R⁵ und/oder R⁶ eine C₁-C₄-Alkylgruppe bedeuten,
und R¹³ 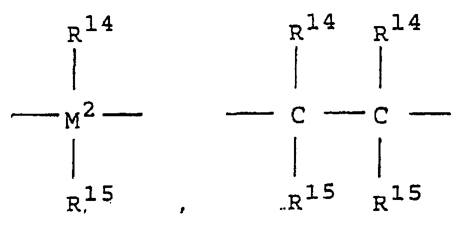 bedeutet, wobei M² Silizium bedeutet und R¹⁴ und R¹⁵ gleich oder verschieden sind und eine C₁-C₄-Alkylgruppe oder eine C₆-C₁₀-Arylgruppe bedeuten.

Ganz besonders geeignet sind die in den Beispielen genannten Verbindungstypen bzw. Verbindungen.

Die Herstellung der Metallocene I erfolgt nach literaturbekannten Verfahren und ist im nachfolgenden Reaktionsschema wiedergegeben.

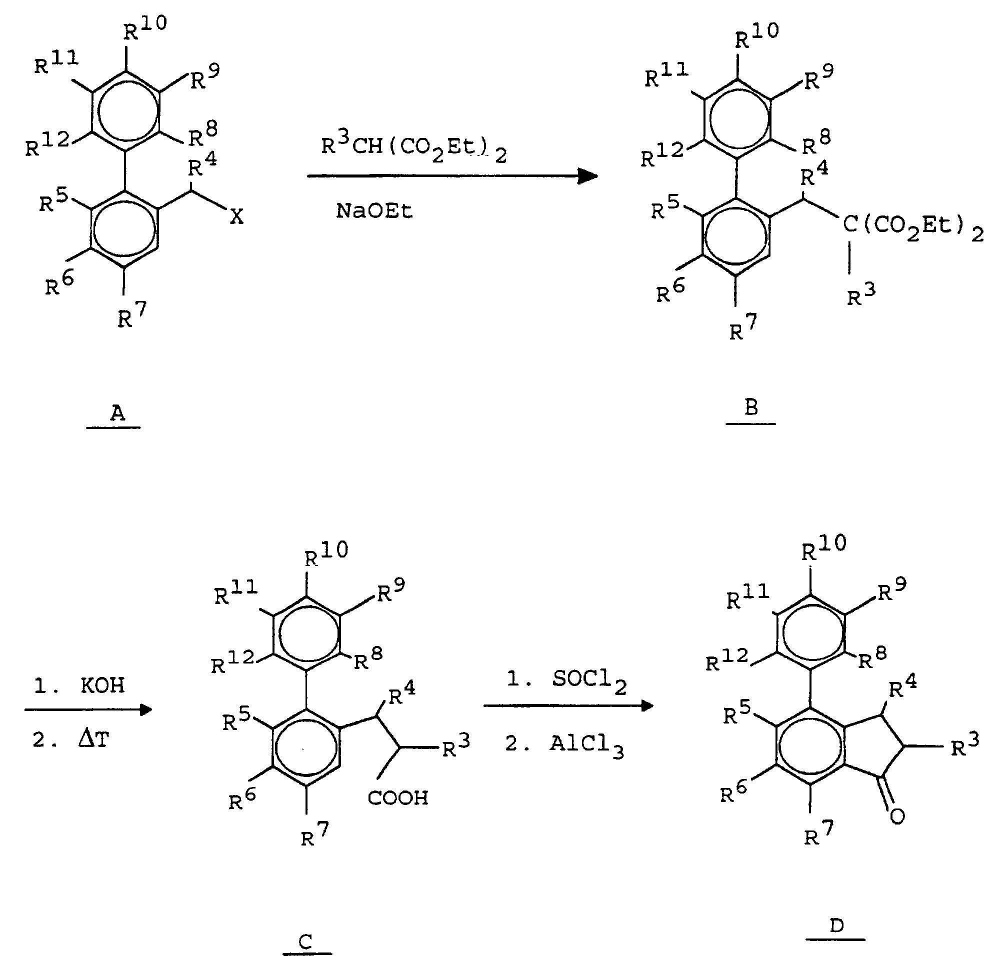

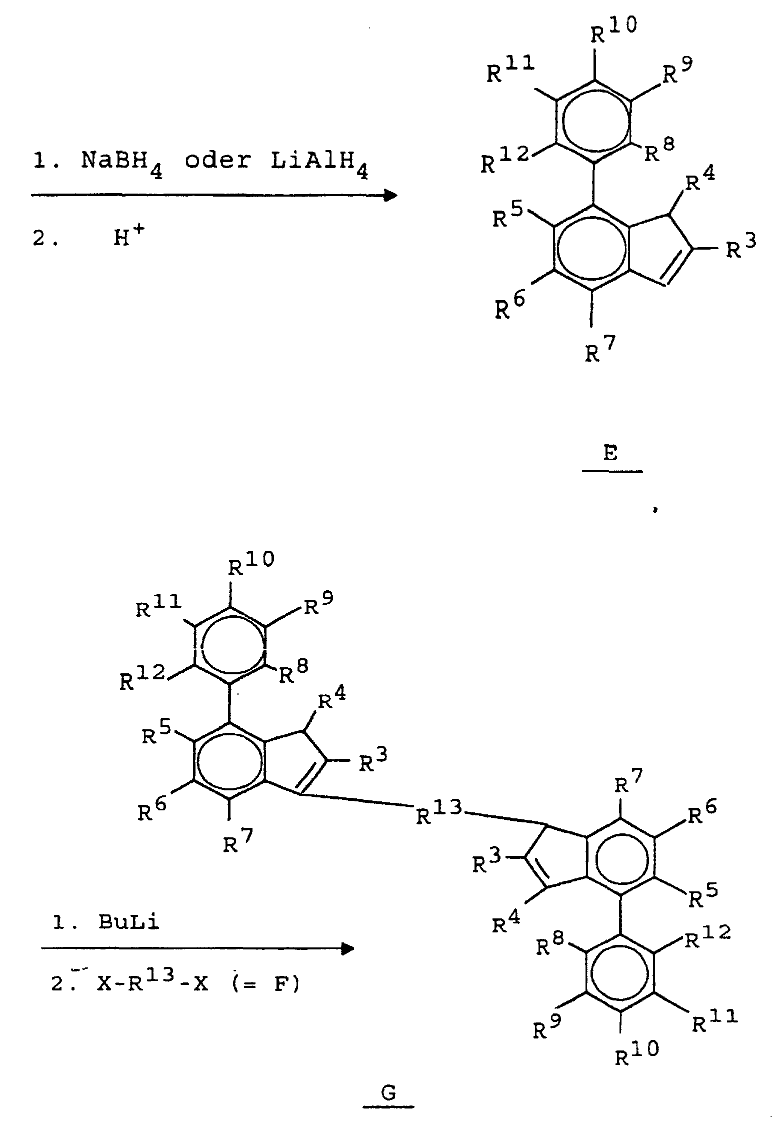

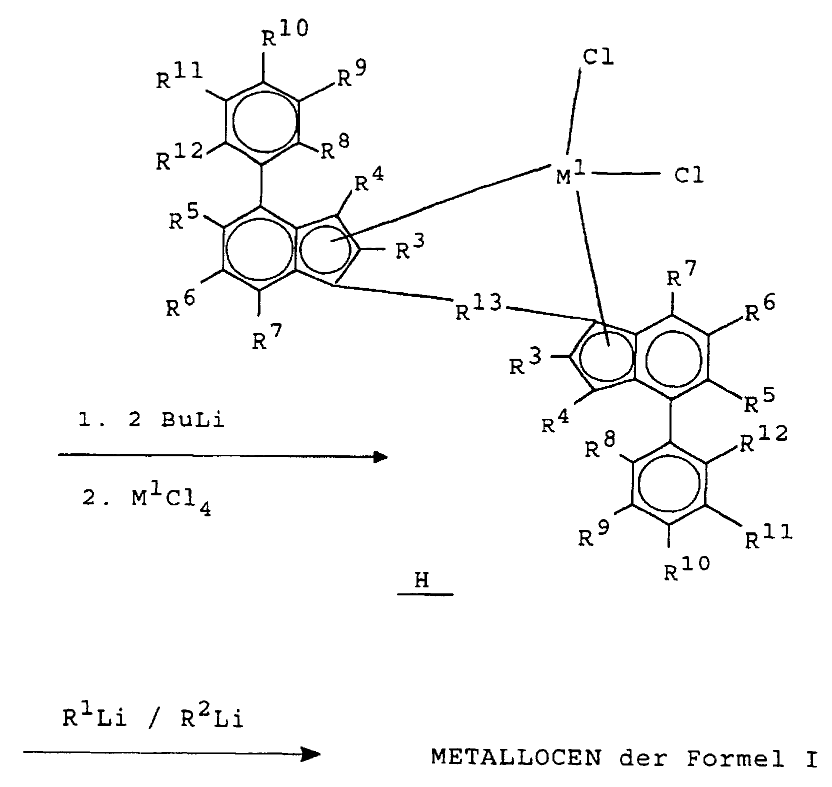

Die 2-Phenyl-benzylhalogenidderivate der Formel A sind im Handel erhältlich oder können nach literaturbekannten Methoden hergestellt werden.

Die Umsetzung zu den Verbindungen der Formel B erfolgt durch Reaktion mit substituierten Malonsäureestern unter basischen Bedingungen, wie beispielsweise in ethanolischen Lösungen von Natriumethanolat.

Die Verbindungen der Formel B werden mit Alkalihydroxiden wie Kaliumhydroxid oder Natriumhydroxid verseift und durch Behandeln der entstandenen Dicarbonsäuren mit Wärme zu den Verbindungen der Formel C decarboxyliert.

Der Ringschluß zu den entsprechenden Phenyl-1-indanonen der Formel D erfolgt durch Umsetzung mit Chlorierungsreagentien wie beispielsweise SOCl₂ zu den entsprechenden Säurechloriden und anschließender Cyclisierung mit einem Friedel-Crafts-Katalysator in einem inerten Solvent, wie z.B. AlCl₃ oder Polyphosphorsäure in Methylenchlorid oder CS₂.

Die Umsetzung zu den 7-Phenyl-indenderivaten der Formel E erfolgt durch Reduktion mit einem hydrid übertragenden Reagenz, wie beispielsweise Natriumborhydrid oder Lithiumaluminiumhydrid oder Wasserstoff und einem entsprechenden Katalysator in einem inerten Lösungsmittel wie beispielsweise Diethylether oder Tetrahyrofuran zu den entsprechenden Alkoholen und Dehydratisierung der Alkohole unter sauren Bedingungen, wie beispielsweise p-Toluolsulfonsäure oder einer wässrigen Mineralsäure oder durch Umsetzung mit wasserentziehenden Substanzen wie Magnesiumsulfat, wasserfreiem Kupfersulfat oder Molekularsiebe.

Die Herstellung der Ligandsysteme der Formel G und die Umsetzung zu den verbrückten chiralen metallocenen der Formel H sowie die Isolierung der gewünschten racemischen Form ist im Prinzip bekannt. Hierzu wird das Phenylindenderivat der Formel E mit einer starken Base wie beispielsweise Butyllithium oder Kaliumhydrid in einem inerten Lösungsmittel deprotoniert und mit einem Reagenz der Formel F zu dem Ligandsystem der Formel G umgesetzt. Dieses wird anschließend mit zwei Äquivalenten einer starken Base wie beispielsweise Butyllithium oder Kaliumhydrid in einem inerten Lösungsmittel deprotoniert und mit dem entsprechenden Metalltetrahalogenid wie beispielsweise Zirkoniumtetrachlorid in einem geeigneten Lösemittel umgesetzt. Geeignete Lösemittel sind aliphatische oder aromatische Lösemittel, wie beispielsweise Hexan oder Toluol, etherische Lösemittel, wie beispielsweise Tetrahydrofuran oder Diethylether oder halogenierte Kohlenwasserstoffe, wie beispielsweise Methylenchlorid oder halogenierte aromatische Kohlenwasserstoffe wie beispielsweise o-Dichlorbenzol. Die Trennung der racemischen und der meso Form erfolgt durch Extraktion oder Umkristallisation mit geeigneten Lösemitteln.

Die Derivatisierung zu den Metallocenen der Formel I kann durch Umsetzung mit Alkylierungsmitteln wie Methyllithium erfolgen.

Die erfindungsgemäßen Metallocene I sind hochaktive Katalysatorkomponenten für die Olefincopolymerisation. Die chiralen Metallocene werden bevorzugt als Racemat eingesetzt. Verwendet werden kann aber auch das reine Enantiomere in der (+)- oder (-)-Form. Mit den reinen Enantiomeren ist ein optisch aktives Polymer herstellbar. Abgetrennt werden sollte jedoch die meso-Form der Metallocene, da das polymerisationsaktive Zentrum (das Metallatom) in diesen Verbindungen wegen der Spiegelsymmetrie am Zentralmetallatom nicht mehr chiral ist und daher kein hochisotaktisches Polymeres erzeugen kann. Wird die meso-Form nicht abgetrennt, entsteht neben isotaktischen Polymeren auch ataktisches Polymer. Für bestimmte Anwendungen, beispielsweise weiche Formkörper, kann dies durchaus wünschenswert sein.

Erfindungsgemäß ist ein Katalysatorsystem vorgesehen, welches ein Metallocen und eine Verbindung, die das Metallocen in eine polymerisationsaktive Spezies überführen kann, enthält. Diese Verbindung ist ein Cokatalysator.

Das Katalysatorsystem kann auch einen Träger enthalten. Das Katalysatorsystem kann auch vorpolymerisiert werden. Bevorzugt ist eine solche geträgerte und vorpolymerisierte Ausführungsform in Polymerisationsverfahren, bei denen ein Polymerpulver mit hoher Schüttdichte, gleichmäßiger Partikelform und guter Anlagengängigkeit notwendig ist.

Erfindungsgemäß wird als Cokatalysator bevorzugt ein Aluminoxan verwendet, welches vorzugsweise die Formel IIa für den linearen Typ und/oder die Formel IIb für den cyclischen Typ aufweist, 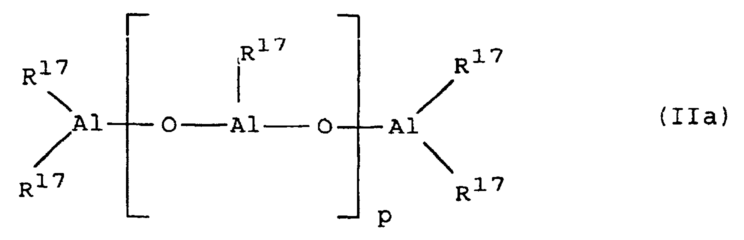 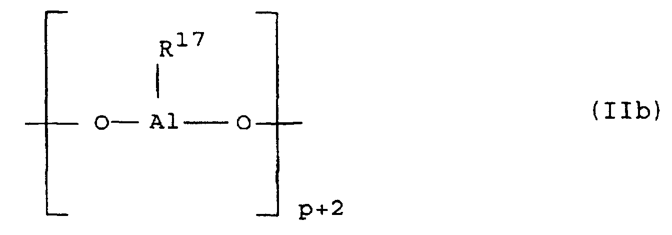 wobei in den Formeln IIa und IIb die Reste R¹⁷ gleich oder verschieden sein können und eine C₁-C₆-Alkylgruppe, eine C₆-C₁₈-Arylgruppe, Benzyl oder Wasserstoff bedeuten und p eine ganze Zahl von 2 bis 50, bevorzugt 10 bis 35 bedeutet.

Bevorzugt sind die Reste R¹⁷ gleich und bedeuten Methyl, Isobutyl, Phenyl oder Benzyl, besonders bevorzugt Methyl.

Sind die Reste R¹⁷ verschieden, so sind sie bevorzugt Methyl und Wasserstoff oder alternativ Methyl und Isobutyl, wobei Wasserstoff oder Isobutyl bevorzugt zu 0,01 bis 40 % (Zahl der Reste R¹⁷) enthalten sind.

Das Aluminoxan kann auf verschiedene Arten nach bekannten Verfahren hergestellt werden. Eine der Methoden ist beispielsweise, daß eine Aluminiumkohlenwasserstoffverbindung und/oder ein Hydridoaluminiumkohlenwasserstoffverbindung mit Wasser (gasförmig, fest, flüssig oder gebunden - beispielsweise als Kristallwasser) in einem inerten Lösungsmittel (wie beispielsweise Toluol) umgesetzt wird. Zur Herstellung eines Aluminoxans mit verschiedenen Resten R¹⁷ werden beispielsweise entsprechend der gewünschten Zusammensetzung zwei verschiedene Aluminiumtrialkyle mit Wasser umgesetzt.

Die genaue räumliche Struktur der Aluminoxane IIa und IIb ist nicht bekannt.

Unabhängig von der Art der Herstellung ist allen Aluminoxanlösungen ein wechselnder Gehalt an nicht umgesetzter Aluminiumausgangsverbindung, die in freier Form oder als Addukt vorliegt, gemeinsam.

Es ist möglich, das Metallocen vor dem Einsatz in der Polymerisationsreaktion mit einem Aluminoxan insbesondere der Formel IIa und/oder IIb vorzuaktivieren. Dadurch wird die Polymerisationsaktivität deutlich erhöht und die Kornmorphologie verbessert. Die Voraktivierung der Übergangsmetallverbindung wird in Lösung vorgenommen. Bevorzugt wird dabei das Metallocen in einer Lösung des Aluminoxans in einem inerten Kohlenwasserstoff aufgelöst. Als inerter Kohlenwasserstoff eignet sich ein aliphatischer oder aromatischer Kohlenwasserstoff. Bevorzugt wird Toluol verwendet.

Die Konzentration des Aluminoxans in der Lösung liegt im Bereich von ca. 1 Gew.-% bis zur Sättigungsgrenze, vorzugsweise von 5 bis 30 Gew.-%, jeweils bezogen auf die Gesamtlösungsmenge. Das Metallocen kann in der gleichen Konzentration eingesetzt werden, vorzugsweise wird es jedoch in einer Menge von 10⁻⁴ - 1 mol pro mol Aluminoxan eingesetzt. Die Voraktivierung beträgt wenige Sekunden bis 60 Stunden, vorzugsweise 1 bis 60 Minuten. Man arbeitet bei einer Temperatur von -78 bis 100°C, vorzugsweise 0 bis 70°C.

Mit Hilfe des Metallocens kann eine Vorpolymerisation erfolgen. Zur Vorpolymerisation wird bevorzugt mindestens eines der in der Polymerisation eingesetzte Olefine verwendet.

Das Metallocen kann auch auf einen Träger aufgebracht werden. Geeignete Trägermaterialien sind beispielsweise Silikagele, Aluminiumoxide, festes Aluminoxan oder andere anorganische Trägermaterialien, wie beispielsweise Magnesiumchlorid. Ein geeignetes Trägermaterial ist auch ein Polymerpulver, insbesondere Polyolefinpulver in feinverteilter Form.

Vorzugsweise wird der Cokatalysator, z. B. das Aluminoxan, auf einen Träger wie beispielsweise Silikagele, Aluminiumoxide, festes Aluminoxan, andere anorganische Trägermaterialien oder auch ein Polyolefinpulver in feinverteilter Form aufgebracht und dann mit dem Metallocen umgesetzt. Alternativ wird das Metallocen und der Cokatalysator in einem geeigneten Lösungsmittel gelöst und dann auf den Träger aufgebracht. Das Lösungsmittel kann dann wieder entfernt werden.

Als anorganische Träger können Oxide eingesetzt werden, die flammenpyrolytisch durch Verbrennung von Element-Halogeniden in einer Knallgas-Flamme erzeugt wurden, oder als Kieselgele in bestimmten Korngrößen-Verteilungen und Kornformen herstellbar sind.

Die Herstellung des geträgerten Cokatalysators kann beispielsweise wie in EP 92 107 331.8 beschrieben in der folgenden Weise in einem Edelstahl-Reaktor in explosionsgeschützter Ausführung mit einem Umpumpsystem der Druckstufe 60 bar, mit Inertgasversorgung, Temperierung durch Mantelkühlung und zweitem Kühlkreislauf über einen Wärmetauscher am Umpumpsystem erfolgen. Das Umpumpsystem saugt den Reaktorinhalt über einen Anschluß im Reaktorboden mit einer Pumpe an und drückt ihn in einen Mischer und durch eine Steigleitung über einen Wärmetauscher in den Reaktor zurück. Der Mischer ist so gestaltet, daß sich in dem Zulauf ein verengter Rohrquerschnitt befindet, wo eine erhöhte Strömungsgeschwindigkeit entsteht, und in dessen Turbulenzzone und entgegen der Strömungsrichtung eine dünne Zuleitung geführt ist, durch welche - getaktet - jeweils eine definierte Menge Wasser unter 40 bar Argon eingespeist werden kann. Die Kontrolle der Reaktion erfolgt über einen Probennehmer am Umpumpkreislauf.

Im Prinzip sind jedoch auch andere Reaktionen und technische Ausführungsformen geeignet.

Im vorstehend beschriebenen Reaktor mit 16 dm³ Volumen werden 5 dm³ Decan unter Inertbedingungen vorgelegt. 0,5 dm³ (= 5,2 mol) Trimethylaluminium werden bei 25°C zugefügt. Danach werden 350 g Kieselgel Grace/Davison 948, welche vorher bei 600°C in einem Argonfließbett getrocknet wurden, durch einen Feststofftrichter in den Reaktor eindosiert und mit Hilfe des Rührers und des Umpumpsystems homogen verteilt. Eine Gesamtmenge von 76,5 g Wasser wird in Portionen von 0,1 cm³ während 3,25 h jeweils alle 15 s in den Reaktor gegeben. Der Druck, herrührend vom Argon und den entwickelten Gasen, wird durch ein Druckregelventil konstant bei 10 bar gehalten. Nachdem alles Wasser eingebracht worden ist, wird das Umpumpsystem abgeschaltet und das Rühren noch 5 h bei 25°C fortgesetzt.

Der in dieser Weise hergestellte geträgerte Cokatalysator "FMAO auf SiO₂" wird als eine 10 %ige Suspension in n-Decan eingesetzt. Der Aluminiumgehalt ist 1,06 mmol Al pro cm³ Suspension. Der isolierte Feststoff enthält 20 Gew.-% Aluminium, das Suspensionsmittel enthält 0,1 Gew.-% Aluminium.

Weitere Möglichkeiten der Herstellung eines geträgerten Cokatalysators sind beispielsweise in EP 92 107 331.8 beschrieben.

Danach wird das erfindungsgemäße Metallocen auf den geträgerten Cokatalysator aufgebracht, indem das gelöste Metallocen mit dem geträgerten Cokatalysator gerührt wird. Das Lösemittel wird entfernt und durch einen Kohlenwasserstoff ersetzt, in dem sowohl Cokatalysator als auch das Metallocen unlöslich sind.

Die Reaktion zu dem geträgerten Katalysatorsystem erfolgt bei einer Temperatur von -20°C bis + 120°C, bevorzugt 0 - 100°C, besonders bevorzugt bei 15 bis 40°C. Das Metallocen wird mit dem geträgerten Cokatalysator in der Weise umgesetzt, daß der Cokatalysator als Suspension mit 1 bis 40 Gew.-%, bevorzugt mit 5 bis 20 Gew.-% in einem aliphatischen, inerten Suspensionsmittel wie n-Decan, Hexan, Heptan, Dieselöl mit einer Lösung des Metallocens in einem inerten Lösungsmittel wie Toluol, Hexan, Heptan, Dichlormethan oder mit dem feingemahlenen Feststoff des Metallocens zusammengebracht wird. Umgekehrt kann auch eine Lösung des Metallocens mit dem Feststoff des Cokatalysators umgesetzt werden.

Die Umsetzung erfolgt durch intensives Mischen, beispielsweise durch Verrühren bei einem molaren Al/M¹-Verhältnis von 100/1 bis 10000/1, bevorzugt 100/1 bis 3000/1, sowie einer Reaktionszeit von 5 bis 600 Minuten, bevorzugt 10 bis 120 Minuten, besonders bevorzugt 10 bis 60 Minuten unter inerten Bedingungen.

Im Laufe der Raktionszeit zur Herstellung des geträgerten Katalysatorsystems treten insbesondere bei der Verwendung der erfindungsgemäßen Metallocene mit Absorptionsmaxima im sichtbaren Bereich Veränderungen in der Farbe der Reaktionsmischung auf, an deren Verlauf sich der Fortgang der Reaktion verfolgen läßt.

Nach Ablauf der Reaktionszeit wird die überstehende Lösung abgetrennt, beispielsweise durch Filtration oder Dekantieren. Der zurückbleibende Feststoff kann 1- bis 5-mal mit einem inerten Suspensionsmittel wie Toluol, n-Decan, Hexan, Dieselöl, Dichlormethan zur Entfernung löslicher Bestandteile im gebildeten Katalysator, insbesondere zur Entfernung von nicht umgesetzten und damit löslichem Metallocen, gewaschen werden.

Das so hergestellte geträgerte Katalysatorsystem kann im Vakuum getrocknet als Pulver oder noch Lösemittel behaftet wieder resuspendiert und als Suspension in einem inerten Suspensionsmittel in das Polymerisationssystem eindosiert werden. Inerte Suspensionsmittel sind die vorgenannten Suspensionsmittel oder wachsartige Kohlenwasserstoffe.

Erfindungsgemäß können an Stelle oder neben eines Aluminoxans Verbindungen der Formeln R¹⁸ₓNH₄₋ₓBR¹⁹₄, R¹⁸ₓPH₄₋ₓBR¹⁹₄, R¹⁸₃CBR¹⁹₄, BR¹⁹₃ als geeignete Cokatalysatoren verwendet werden. In diesen Formeln bedeutet x eine Zahl von 1 bis 4, bevorzugt 3, die Reste R¹⁸ sind gleich oder verschieden, bevorzugt gleich, und bedeuten C₁-C₁₀-Alkyl, C₆-C₁₈-Aryl oder 2 Reste R¹⁸ bilden zusammen mit dem sie verbindenden Atom einen Ring, und die Reste R¹⁹ sind gleich oder verschieden, bevorzugt gleich, und stehen für C₆-C₁₈-Aryl, das durch Alkyl, Haloalkyl oder Fluor substituiert sein kann.

Insbesondere steht R¹⁸ für Ethyl, Propyl oder Phenyl und R¹⁹ für Phenyl, Pentafluorphenyl, 3,5-Bistrifluormethylphenyl, Mesityl, Xylyl oder Tolyl (vgl. EP-A 277 003, EP-A 277 004 und EP-A 426 638).

Bei Verwendung der obengenannten Cokatalysatoren besteht der eigentliche (aktive) Polymerisationskatalysator aus dem Reaktionsprodukt von Metallocen und mindestens einem der Cokatalysatoren. Daher wird zunächst dieses Reaktionsprodukt bevorzugt außerhalb des Polymerisationsreaktors in einem separaten Schritt unter Verwendung eines geeigneten Lösungsmittels hergestellt.

Prinzipiell ist als Cokatalysator erfindungsgemäß jede Verbindung geeignet, die aufgrund ihres Lewis-Acidität das neutrale Metallocen in ein Kation überführen und dieses stabilisieren kann ("labile Koordination"). Darüberhinaus soll der Cokatalysator oder das aus ihm gebildete Anion keine weiteren Reaktionen mit dem gebildeten Metallocenkation eingehen (vgl. EP-A 427 697).

Zur Entfernung von im Olefinmonomer vorhandenen Katalysatorgiften ist eine Reinigung mit einem Aluminiumalkyl, beispielsweise Trimethylaluminium, Triisobutylaluminum oder Triethylaluminium vorteilhaft. Diese Reinigung kann sowohl im Polymerisationssystem selbst erfolgen, oder das Olefin wird vor der Zugabe in das Polymerisationssystem mit der Al-Verbindung in Kontakt gebracht und anschließend wieder abgetrennt.

Erfindungsgemäß ist außerdem ein Verfahren zur Herstellung eines Copolymers vorgesehen. Dazu kann bei einer Temperatur von 50 bis 200°C, bevorzugt 55 bis 150°C, besonders bevorzugt bei 60 bis 150°C, bei einem Druck von 0,5 bis 100 bar, bevorzugt 2 bis 80 bar, besonders bevorzugt 20 bis 64 bar in Lösung, in Suspension oder in der Gasphase, einstufig oder mehrstufig, in Gegenwart des erfindungsgemäßen Katalysatorsystems polymerisiert werden.

Die Copolymerisation kann in Lösung, in Suspension oder in der Gasphase kontinuierlich oder diskontinuierlich ein oder mehrstufig bei einer Temperatur von 50 bis 200°C, vorzugsweise 5 bis 150°C, besonders bevorzugt 60 bis 150°C durchgeführt werden. Copolymerisiert werden Propylen und Olefine, die sich von Ethylen oder Olefinen mit mindestens 4 C-Atomen der Formel R^{a}-CH = CH-R^{b} ableiten, wobei R^{a} und R^{b} gleich oder verschieden sind und ein Wasserstoffatom oder einen Kohlenwasserstoffrest mit 1 bis 15 C-Atomen wie einen Alkylrest bedeuten, oder R^{a} und R^{b} mit den sie verbindenden C-Atomen einen Ring mit 4 bis 12 C-Atomen bilden. Ferner sind als Olefine auch Diene einsetzbar, R^{a} oder R^{b} bedeutet in diesem Fall ein C₂ bis C₁₂-Alken und R^{a} und R^{b} können auch hier zyklisch verbunden sein. Beispiele für solche Diene sind Ethylidennorbornen, Norbornadien, Dicyclopentadien, 1,4-Hexadien oder Butadien. Bevorzugt werden solche Diene zur Copolymerisation mit Propylen und einem weiteren Olefin verwendet.

Beispiele für Olefine als Comonomere sind 1- Olefine wie Ethylen, 1-Buten, 1-Penten, 1-Hexen, 4-Methyl-1-penten, 1-Octen, Norbornen. Insbesondere werden Propylen und Ethylen polymerisiert, im Falle einer Terpolymerherstellung werden Propylen, Ethylen und Ethylidennorbornen bevorzugt polymerisiert.

Als Molmassenregeler und/oder zur Steigerung der Aktivität wird, falls erforderlich, Wasserstoff zugegeben. Der Gesamtdruck im Polymerisationssystem beträgt 0,5 bis 100 bar. Bevorzugt ist die Polymerisation in dem technisch besonders interessanten Druckbereich von 5 bis 64 bar.

Dabei wird das Metallocen in einer Konzentration, bezogen auf das Übergangsmetall von 10⁻³ bis 10⁻⁸, vorzugsweise 10⁻⁴ bis 10⁻⁷ mol Übergangsmetall pro dm³ Reaktorvolumen angewendet. Das Aluminoxan wird in einer Konzentration von 10⁻⁵ bis 10⁻¹ mol, vorzugsweise 10⁻⁴ bis 10⁻² mol pro dm³ Lösemittel bzw. pro dm³ Reaktorvolumen verwendet. Die anderen genannten Cokatalysatoren werden in etwa äquimolaren Mengen zum Metallocen verwendet. Prinzipiell sind aber auch höhere Konzentrationen möglich.

Wenn die Polymerisation als Suspensions- oder Lösungspolymerisation durchgeführt wird, wird ein für das Ziegler-Niederdruckverfahren gebräuchliches inertes Lösemittel verwendet. Beispielsweise arbeitet man in einem aliphatischen oder cycloaliphatischen Kohlenwasserstoff; als solcher sei beispielsweise Propan, Butan, Hexan, Heptan, Isooctan, Cyclohexan, Methylcyclohexan, genannt. Weiterhin kann eine Benzin bzw. hydrierte Dieselölfraktion benutzt werden. Brauchbar ist auch Toluol. Bevorzugt wird im flüssigen Monomeren polymerisiert.

Werden inerte Lösemittel verwendet, werden die Monomeren, gasförmig oder flüssig zudosiert.

Die Dauer der Polymerisation ist beliebig, da das erfindungsgemäß zu verwendende Katalysatorsystem einen nur geringen zeitabhängigen Abfall der Polymerisationsaktivität zeigt.

Vor der Zugabe des Katalysators, insbesondere des geträgerten Katalysatorsystems (aus einem erfindungsgemäßen Metallocen und einem geträgerten Cokatalysator oder aus einem erfindungsgemäßen Metallocen und einer aluminiumorganischen Verbindung auf einem Polymerpulver in feinverteilter Form), kann zusätzlich eine andere Aluminiumalkylverbindung wie beispielsweise Trimethylaluminium, Triethylaluminium, Triisobutylaluminium, Trioctylaluminium oder Isoprenylaluminium zur Inertisierung des Polymerisationssystems (beispielsweise zur Abtrennung vorhandener Katalysatorgifte im Olefin) in den Reaktor gegeben werden. Diese wird in einer Konzentration von 100 bis 0,01 mmol Al pro kg Reaktorinhalt dem Polymerisationssystem zugesetzt. Bevorzugt werden Triisobutylaluminium und Triethylaluminium in einer Konzentration von 10 bis 0,1 mmol Al pro kg Reaktorinhalt. Dadurch kann bei der Synthese eines geträgerten Katalysatorsystems das molare Al/M¹-Verhältnis klein gewählt werden.

Grundsätzlich ist jedoch der Einsatz weiterer Substanzen zur Katalyse der Copolymerisationsreaktion nicht erforderlich, d.h. die erfindungsgemäßen Systeme können als alleinige Katalysatoren für die Olefincopolymerisation verwendet werden, insbesondere sind keine Stereoregulatoren (Donoren) erforderlich.

Das erfindungsgemäße Verfahren zeichnet sich dadurch aus, daß mit ihm im technisch besonders interessanten Temperaturbereich von 65 bis 150°C hochmolekulare Propylencopolymere herstellbar sind. Insbesondere sind dadurch hochmolekulare statistische Copolymere mit höherem Comonomerengehalt zugänglich, die sich durch hohe Transparenz und geringe extrahierbare Anteile auszeichnen und Kautschuke, die unter industriell sinnvollen Polymerisationstemperaturen von > 50°C mit ihrer Molmasse auf einem sehr hohen Niveau liegen und Viskositätszahlen von > 200 cm³/g aufweisen.

Erfindungsgemäß ist die Verwendung von mindestens einer erfindungsgemäßen Katalysatorkomponente oder mindestens eines erfindungsgemäßen Katalysatorsystems zur Herstellung von hochmolekularen Copolymeren vorgesehen.

Die Erfindung wird anhand der nachfolgenden Beispiele näher erläutert.

Alle Glasgeräte wurden im Vakuum ausgeheizt und mit Argon gespült. Alle Operationen wurden unter Ausschluß von Feuchtigkeit und Sauerstoff in Schlenkgefäßen durchgeführt. Die verwendeten Lösemittel wurden unter Argon jeweils frisch über Na/K-Legierung destilliert und in Schlenkgefäßen aufbewahrt.

Es bedeuten:
- VZ =: Viskositätszahl in cm³/g
- M_{w} =: Molmassengewichtsmittel in g/mol (ermittelt durch Gelpermeationschromatographie)
- M_{w}/Mₙ =: Molmassendispersität
- Schmp. =: Schmelzpunkt in °C (ermittelt mit DSC, 20°C/min. Aufheiz/Abkühlgeschwindigkeit)
- MFI 230/2.16 MFI 230/5 =: Schmelzindex, gemessen nach DIN 53 735.

### I. Synthese der in den Polymerisationsbeispielen verwendeten Metallocene I (die eingesetzten Edukte sind kommerziell erhältlich) beziehungsweise der für die Vergleichsversuche verwendeten nicht erfindungsgemäßen Metallocene (5), (12), (19), (24), (26) und (30) aus den Beispielen A, B, C, D, E und G.

### Vergleichsbeispiel A:

### Rac-Dimethylsilyl-bis(2-methyl-4-phenyl-indenyl)zirkoniumdichlorid (5)

1. (±)-2-(2-Phenyl-benzyl)propionsäure (1).
   Zu 6,5 g (0,285 mol) Natrium in 160 cm³ H₂O-freiem EtOH wurden bei Raumtemperatur 48,6 g (0,279 mol) Diethylmethylmaloat zugetropft. Anschließend wurden 70,4 g (0,285 mol) 2-Phenyl-benzylbromid in 20 cm³ H₂O-freiem EtOH zugetropft und der Ansatz 3 h zum Rückfluß erhitzt. Das Lösemittel wurde abgezogen und der Rückstand mit 200 cm³ H₂O versetzt. Die organische Phase wurde abgetrennt, die wäßwige Phase mit NaCl gesättigt und 2mal mit je 200 cm³ Et₂O extrahiert. Die mit den Extrakten vereinigte organische Phase wurde getrocknet (MgSO₄).
   Der nach Abziehen des Lösemittels verbliebene Rückstand wurde in 500 cm³ EtOH und 50 cm³ H₂O aufgenommen und mit 56 g (1 mol) KOH versetzt. Die Reaktionsmischung wurde 4 h unter Rückfluß erhitzt. Das Lösemittel wurde im Vakuum abgezogen, der Rückstand in 500 cm³ H₂O aufgenommen und mit konzentrierter wäßriger HCl bis pH 1 angesäuert. Der ausgefallene Niederschlag wurde abgesaugt und am Kugelrohr 30 min unter starkem Aufschäumen auf 250°C erhitzt. Man erhielt 58,3 g (85 %) 1 als zähflüssiges Öl.
   ¹H-NMR (100 Mhz, CDCl₃): 11,7 (s, 1H, COOH), 7,1-7,5 (m, 9H. Arom. H), 2,3-3,2 (m, 3H, CH u. CH₂), 0,9 (d, 3H, CH₃).
2. (±)-2-Methyl-4-phenyl-indan-1-on (2)
   Eine Lösung von 58 g (0,242 mol) 1 in 60 cm³ (0,83 mol) Thionylchlorid wurde 18 h bei Raumtemperatur gerührt. Überschüssiges Thionylchlorid wurde bei 10 mbar entfernt und der ölige Rückstand durch mehrmaliges Lösen in je 100 cm³ Toluol und Abziehen im Vakuum von anhaftenden Resten Thionylchlorid befreit.
   Das Säurechlorid wurde in 150 cm³ Toluol aufgenommen und bei 10°C zu einer Suspension von 48 g (0,363 mol) AlCl₃ in 400 cm³ Toluol getropft. Nach vollständiger Zugabe wurde das Gemisch noch 3 h unter Rückfluß erhitzt. Die Reaktionsmischung wurde auf 500 g Eis gegossen und mit konzentrierter wäßriger HCl bis pH 1 angesäuert. Die organische Phase wurde abgetrennt und die wäßrige Phase 3mal mit je 100 cm³ Et₂O nachextrahiert. Die vereinigten organischen Phasen wurden mit gesättigter wäßriger NaHCO₃-, gesättigter wäßriger NaCl-Lösung gewaschen und danach getrocknet (MgSO₄). Es wurden 50,4 g (93 %) 2 erhalten, das ohne weitere Reinigung weiter umgesetzt wurde.
   ¹H-NMR (100 Mhz, CDCl₃): 7,2-7,8 (m, 8H, arom. H), 3,3 (dd, 1H, β-H), 2,5-2,9 (m, 2H, α- und β-H), 1,3 (d, 3H, CH₃).
3. 2-methyl-7-phenyl-inden (3)
   50 g (0,226 mol) 2 wurden in 450 cm³ THF/MeOH (2:1) gelöst und bei 0°C unter Rühren portionsweise mit 12,8 g (0,34 mol) Natriumborhydrid versetzt und 18 h weiter gerührt. Die Reaktionsmischung wurde auf Eis gegossen und mit konzentrierter HCl bis pH 1 versetzt und mehrmals mit Et₂O extrahiert. Die vereinigten organischen Phasen wurden mit gesättigter wäßriger NaHCO₃-, NaCl-Lösung gewaschen und danach getrocknet (MgSO₄). Das Lösemittel wurde im Vakuum entfernt und das Rohprodukt ohne weitere Reinigung in 1 dm³ Toluol aufgenommen, mit 2 g p-Toluolsulfonsäure versetzt und 2 h zum Rückfluß erhitzt. Die Reaktionsmischung wurde mit 200 cm³ gesättigter wäßriger NaHCO₃-Lösung gewaschen und das Lösemittel im Vakuum entfernt. Das Rohprodukt wurde durch Filtration über 500 g Kieselgel (Hexan/CH₂Cl₂) gereinigt. Es wurden 42 g (90 %) 3 als farbloses Öl erhalten.
   ¹H-NMR (100 Mhz, CDCl₃): 7,0-7,6 (m, 8H, arom. H), 6.5 (m, 1H, H-C(3)), 3,4 (s, 2H, CH₂), 2,1 (s, 3H, CH₃).
4. Dimethylbis(2-methyl-4-phenyl-indenyl)silan (4)
   Eine Lösung von 15 g (72,7 mmol) 3 in 200 cm³ H₂O- und O₂-freiem Toluol und 10 cm³ H₂O- und O₂-freiem THF wurden bei Raumtemperatur unter Argon mit 29 cm³ (73 mmol) einer 2,5 M Lösung von Butyllithium in Hexan versetzt und 1 h auf 80°C erhitzt. Anschließend wurde der Ansatz auf 0°C gekühlt und mit 4,7 g (36,4 mmol) Dimethyldichlorsilan versetzt. Das Gemisch wurde 1 h auf 80°C erhitzt und anschließend auf 100 cm³ H₂O gegossen. Es wurde mehrmals mit Et₂O extrahiert und die vereinigten organischen Phasen getrocknet (MgSO₄). Das nach Abziehen des Lösemittels im Vakuum verbliebene Rohprodukt wurde an 300 g Kieselgel (Hexan/CH₂Cl₂) chromatographiert. Es wurden 12,0 g (70 %) 4 erhalten.
   ¹H-NMR (100 Mhz, CDCl₃): 7,10-7,70 (m, 16H, arom. H)), 6,80 (m, 2H, H-C(3)), 3,80 (s, 2H, H-C(1)), 2,20 (m, 6H, CH₃), -0,20 (m, 6H, CH₃Si).
5. Rac-Dimethylsilylbis(2-methyl-4-phenyl-indenyl)zirkiniumdichlorid (5)
   Eine Lösung von 6,0 g (12,9 mmol) 4 in 100 cm³ H₂O- und O₂-freiem Toluol wurde unter Argon bei Raumtemperatur mit 10,6 cm³ (26 mmol) einer 2,5 M-Lösung von Butyllithium in Hexan versetzt und 3 h zum Rückfluß erhitzt. Anschließend wurde die Suspension des Dilithiosalzes auf -25°C abgekühlt und mit 3,2 g (13,6 mmol) Zirkoniumtetrachlorid versetzt. Man erwärmte den Ansatz innerhalb 1 h auf Raumtemperatur, rührte ihn noch 1 h und filtrierte dann über eine G3-Fritte. Der Rückstand wurde mit 50 cm³ Toluol extrahiert und die vereinigten Filtrate im Vakuum einer Ölpumpe vom Lösemittel befreit. Man erhielt 9,0 g des Metallocens als Mischung der racemischen und der meso-Form im Verhältnis 1:1 1 in Form eines gelben Pulvers. Das reine Racemat (5) konnte durch mehrfaches Verrühren der Rohmischung mit je 20 cm³ Methylenchlorid gewonnen werden, wobei das Racemat als gelbes Krristallpulver zurückblieb und die meso-Form ausgewaschen wurde. Man erhielt 2,74 g (33 %) des reinen Racemats.
   ¹H-NMR (300 Mhz, CDCl₃): 7,0-7,7 (m, 16H, arom. H), 6,9 (s, 2H, H-C(3)), 2,2 (s, 6H, CH₃), 1,3 (m, 6H, CH₃Si). Molmasse: 626 M⁺, korrektes Zerfallsmuster.

### Vergleichsbeispiel B:

### rac-Dimethylsilandiylbis(2-methyl-4-(1-naphthyl)indenyl)-zirkoniumdichlorid (12)

1. 2-(1-Naphthyl)-toluol (6)
   13,9 g (0,57 mol) Magnesium-Späne wurden mit 150 ml H₂O-freiem Et₂O überschichtet und die Grignard-Reaktion mit 5 g 2-Bromtoluol und eingigen Körnchen Jod zum Anspringen gebracht. Anchließend wurden 93 g (0,57 mol) 1-Bromtoluol in 450 ml H₂O-freiem Et₂O so zugetropft, daß die Reaktionsmischung am Sieden gehalten wurde. Nach vollständiger Zugabe wurde noch solange zum Sieden erhitzt, bis das Magnesium vollständig umgesetzt war.
   Die Grignard-Lösung wurde anschließend zu einer Lösung von 118 g (0,57 mol) 1-Bromnaphthalin und 3,5 g Bis(triphenylphosphin)nickeldichlorid in 800 cm³ Toluol getropft, so daß die Innentemperatur 50°C nicht überstieg. Anschließend wurde noch 3 h zum Rückfluß erhitzt, mit 500 ml 10 %iger wäßriger HCl versetzt, die Phasen getrennt und die organische Phase im Vakuum vom Lösemittel befreit. Nach Filtration über Kieselgel (Hexan) wurde 115 g (92 %) 6 als farbloses Öl erhalten.
   ¹H-NMR (100 Mhz, CDCl₃): 7,2-8,0 (m, 11h, arom. H), 2,0 (s, 3H, CH₃).
2. 2-(1-Naphthyl)-benzylbromid (7)
   114 g (0,52 mol) 6 und 103 g (0,58 mol) N-Bromsuccinimid wurden bei Raumtemperatur in 2000 cm³ Terachlorkohlenstoff gelöst, mit 3 g Azobisisoburyronitril versetzt und 4 h zum Rückfluß erhitzt. Das ausgefallene Succinimid wurde abfiltriert, das Lösemittel im Vakuum entfernt und der Rückstand durch Filtration über 1000 g Kieselgel (Hexan/Methylenchlorid 9:1) gereinigt. Es wurden 141 g (82 %) 7 als farbloses, tränenreizendes Öl erhalten.
   ¹H-NMR (100 Mhz, CDCl₃): 7,1-8,0 (m, 11H, arom. H), 4,2 (q, 2H, CH₂Br).
3. (±)-2-(2(1-naphthyl)benzyl)propionsäure (8)
   Zu 10 g (0,43 mmol) Natrium in 100 cm³ H₂O-freiem EtOH werden bei Raumtemperatur 75 g (0.43 mmol) Methylmalonsäuredimethylester gelöst in 50 cm³ H₂O-freiem EtOH zugetropft. Anschließend wurden 140 g (0,43 mmol) 7 in 200 cm³ H₂O-freiem EtOH zugetropft und 3 h zum Rückfluß erhitzt. Bei Raumtemperatur wurden 85 g (1,3 mol) KOH gelöst in 100 cm³ H₂O zugesetzt und weitere 4 h zum Rückfluß erhitzt. Die Lösemittel wurden im Vakuum entfernt, der Rückstand bis zur vollständigen Lösung mit H₂O versetzt und mit konzentrierter wäßriger HCl bis pH 1 angesäuert. Der ausgefallene Niederschlag wurde abgesaugt, getrocknet und 1 h auf 130°C erhitzt. Man erhielt 96 g (77 %) 8 als zähflüssiges Öl.
   ¹H-NMR (100 MHz,CDCl₃): 10,1 (s, 1H, COOH), 6,9-8,0 (m, 11H, arom. H), 2,3-3,0 (m, 3H, CH₂ und CH), 0,8 (d, 3H, CH₃).
4. (±)-2-Methyl-4-(1-naphthyl)-1-indanon (9)
   Eine Lösung von 96 g (0,33 mol) 8 in 37 cm³ (0,5 mol) Thionylchlorid wurde 18 h bei Raumtemperatur gerührt. Überschüssiges Thionylchlorid wurde bei 10 mbar entfernt und der ölige Rückstand durch mehrmaliges Lösen in je 100 cm³ Toluol und Abziehen im Vakuum von anhaftenden Resten Thionylchlorid befreit.
   Das Säurechlorid wurde in 200 cm³ Toluol aufgenommen und bei 10°C zu einer Suspension von 44 g (0,33 mol) AlCl₃ in 1000 cm³ Toluol getropft und 3 h auf 80°C erhitzt. Die Reaktionsmischung wurde auf 1000 g Eis gegossen und mit konz. wäßriger HCl bis pH 1 angesäuert. Die organische Phase wurde abgetrennt und die wäßrige Phase 3mal mit je 200 cm³ Methylenchlorid nachextrahiert. Die vereinigten organischen Phasen wurden mit gesättigter wäßriger NaHCO₃-, gesättigter wäßriger NaCl-Lösung gewaschen und anschließend getrocknet (MgSO₄). Nach Chromatographie an 1000 g Kieselgel (Hexan/Methylenchlorid) wurden 12 g (13 %) 9 erhalten.
   ¹H-NMR (100 Mhz, CDCl₃): 7,3-8,0 (m, 10H, arom. H), 2,2-3,2 (m, 3H, CH₂ und CH), 1,2 (d, 3H, CH₃).
5. 2-Methyl-7-(1-naphtyl)inden (10)
   Zu einer Lösung von 12 g (44 mmol) 9 in 100 cm³ THF/Methanol 2:1 wurden bei 0°C 1,3 g (33 mmol) NaBH₄ zugesetzt und 18 h bei Raumtemperatur gerührt. Die Reaktionsmischung wurde auf 100 g Eis gegossen, mit konz. wäßriger HCl bis pH 1 versetzt und mehrmals mit Et₂O extrahiert. Die vereinigten organischen Phasen wurden mit gesättigter wäßriger NaHCO₃-, gesättigter wäßriger NaCl-Lösung gewaschen und anschließend getrocknet (MgSO₄).
   Das Rohprodukt wurde in 200 cm³ Toluol aufgenommen, mit 0,5 g p-Toluolsulfonsäure versetzt und 2 h am Wasserabscheider zum Rückfluß erhitzt. Die Reaktionsmischung wurde 3mal mit 50 cm³ gesättigter wäßriger NaHCO₃-Lösung gewaschen und das Lösemittel im Vakuum entfernt. Nach Filtration über 200 g Kieselgel (Hexan/Methylenchlorid) wurden 10 g (86 %) 10 als farbloses Öl erhalten.
   ¹H-NMR (100 Mhz, CDCl₃): 7,0-8,0 (m, 10H, arom. H), 6,6 (m, 1 H, CH), 3,0 (m, 2H, CH₂), 2,0 (m, 3H, CH₃).
6. Dimethylbis(2-methyl-4-(1-naphthyl)indenyl)silan (11)
   Eine Lösung von 10 g (38 mmol) 10 in 100 cm³ H₂O- und O₂-freiem Toluol und 5 ml H₂O- und O₂-freiem THF wurden bei Raumtemperatur mit 14,4 cm³ (50 mmol) einer 20 %igen Lösung von Butyllithium in Toluol versetzt und 2 h auf 80°C erhitzt. Anschließend wurde die gelbe Suspension auf 0°C gekühlt und mit 2,5 g (19 mmol) Dimethyldichlorsilan versetzt. Die Reaktionsmischung wurde noch 1 h auf 80°C erhitzt und anschließend mit 50 cm³ H₂O gewaschen. Das Lösemittel wurde im Vakuum entfernt und der Rückstand aus Heptan bei - 20°C umkristallisiert. Es wurde 8,2 g (75 %) 11 als farblose Kristalle erhalten.
   ¹H-NMR (100 Mhz, CDCl₃): 7,2-8,1 (m, 20H, arom. H), 6,4 (m, 2H, H-C(3)), 4,0 (m, 2H, H-C(1)), -0,1 (s, 6H, CH₃Si).
7. rac-Dimethylsilandiylbis(2-methyl-4-(1-naphthyl)indenyl)-zirkoniumdichlorid (12)
   Eine Lösung von 8,0 g (14 mmol) 11 in 70 cm³ H₂O- und O₂-freiem Et₂O wurden unter Argon bei Raumtemperatur mit 10,5 cm³ einer 20 %igen Lösung von Butyllithium in Toluol versetzt und anschließend 3 h zum Rückfluß erhitzt. Das Lösemittel wurde im Vakuum entfernt und der Rückstand mit 50 ml H₂O- und O₂-freiem Hexan über eine G3-Schlenkfritte filtriert, mit 50 ml H₂O- und O₂-freiem Hexan nachgewaschen und getrocknet (0,1 mbar, RT).
   Das Dilithiosalz wurde bei -78°C zu einer Suspension von 3,2 g (14 mmol) Zirkoniumtetrachlorid in 80 cm³ Methylenchlorid gegeben und im Verlauf von 18 h unter magn. Rühren auf Raumtemperatur erwärmt. Der Ansatz wurde über eine G3-Fritte filtriert und der Rückstand portionsweise mit insgesamt 400 cm³ Methylenchlorid nachextrahiert. Die vereinigten Filtrate wurden im Vakuum vom Lösemittel befreit und aus Methylenchlorid umkristallisiert. Es wurden 1,5 g (15 %) der racemischen und der meso-Form im Verhältnis 1:1 erhalten. Durch erneutes Umkristallisieren aus Methylenchlorid wurde der racemische Komplex in Form gelber Kristalle erhalten.
   ¹H-NMR (100 Mhz, CDCl₃): 7,0-8,0 (m, 22H, arom. H), 6,5 (s, 2H, H-C(3)), 2,2 (s, 6H, CH₃), 1,3 (s, 6H, CH₃'Si). Massenspektrum 729 m⁺, korrektes Zerfallsmuster.

### Vergleichsbeispiel C:

### rac-Dimethylsilandiylbis(2-methyl-4-(2-naphthyl)indenyl)-zirkoniumdichlorid (19)

1. 2-(2-Naphthyl)-toluol (13)
   14 g (0,57 mol) Magnesium-Späne wurden mit 150 ml H₂O-freiem Et₂O überschichtet und die Grignard-Reaktion mit 5 g 2-Bromtoluol und einigen Körnchen Jod zum Anspringen gebracht. Anschließend wurden 95 g (0,58 mol) Bromtoluol in 450 ml H₂O-freiem Et₂O so zugetropft, daß die Reaktionsmischung am Sieden gehalten wurde. Nach vollständiger Zugabe wurde noch solange zum Sieden erhitzt, bis das Magnesium vollständig umgesetzt war.
   Die Grignard-Lösung wurde anschließend zu einer Lösung von 120 g (0,57 mol) 2-Bromnaphthalin und 3,5 g Bis(triphenylphosphin)nickelchlorid in 800 cm³ Toluol getropft, so daß die Innentemperatur 50°C nicht überstieg. Anschließend wurde noch 3 h zum Rückfluß erhitzt, mit 500 ml 10 %iger wäßriger HCl versetzt, die Phasen getrennt und die organische Phase im Vakuum vom Lösemittel befreit. Nach Filtration über Kieselgel (Hexan) wurden 107 g (87 %) 13 als farbloses Öl erhalten.
   ¹H-NMR (100 Mhz, CDCl₃): 7,0-7,9 (m, 11H, arom. H), 1,9 (s, 3H, CH₃).
2. 2-(2-Naphthyl)benzylbromid (14)
   105 g (0,48 mol) 13 und 90 g (0,5 mol) N-Bromsuccinimid wurde bei Raumtemperatur in 2000 cm³ Tetrachlorkohlenstoff gelöst, mit 3 g Azobisisoburyronitril versetzt und 4 h zum Rückfluß erhitzt. Das ausgefallene Succinimid wurde abfiltriert, das Lösemittel im Vakuuum entfernt und der Rückstand durch Filtration über 1000 g Kieselgel (Hexan/Methylenchlorid 9:1) gereinigt. Es wurden 112 g (79 %) 14 als farbloses, tränenreizendes Öl erhalten.
   ¹H-NMR (100 Mhz, CDCl₃): 6,9-8,0 (m, 11H, arom. H), 4,1 (s, 2H, CH₂Br).
3. (±)-2-(2-(2-naphthyl)benzyl)-propionsäure (15)
   Zu 8,5 g (0,37 mmol) Natrium in 100 cm³ H₂O-freiem EtOH wurden bei Raumtemperatur 70 g (0,37 mmol) Methyl-malonsäurediethylester gelöst in 50 cm³ H₂O-freiem EtOH zugetropft. Anschließend wurden 110 g (0,37 mmol) 14 in 200 cm³ H₂O-freiem EtOH zugetropft und 3 h zum Rückfluß erhitzt. Bei Raumtemperatur wurden 62 g (1,1 mol) KOH gelöst in 100 cm³ H₂O zugesetzt und weitere 4 h zum Rückfluß erhitzt. Die Lösemittel wurden im Vakuum entfernt, der Rückstand bis zur vollständigen Lösung mit H₂O versetzt und mit konzentrierter wäßriger HCl bis pH 1 angesäuert. Der ausgefallene Niederschlag wurde abgesaugt, getrocknet und 1 h auf 130°C erhitzt. Man erhielt 90 g (84 %) 15 als zähflüssiges Öl.
   ¹H-NMR (100 Mhz, CDCl₃): 10,9 (s, 1H, COOH), 7,0-8,1 (m, 11H, arom. H), 2,3-3,0 (m, 3H, CH₂ und CH), 1,0 (d, 3H, CH₃).
4. (±)-2-Methyl-4-(2-naphthyl)-1-indanon (16)
   Eine Lösung von 89 g (0,31 mol) 15 in 37 cm³ (0,5 mol) Thionylchlorid wurde 18 h bei Raumtemperatur gerührt. Überschüssiges Thionylchlorid wurde bei 10 mbar entfernt und der ölige Rückstand durch mehrmaliges Lösen in je 100 cm³ Toluol und Abziehen im Vakuum von anhaftenden Resten Thionylchlorid befreit.
   Das Säurechlorid wurde in 200 cm³ Toluol aufgenommen und bei 10°C zu einer Suspension von 44 g (0,33 mol) AlCl₃ in 1000 cm³ Toluol getropft und 3 h auf 80°C erhitzt. Die Reaktonsmischung wurde auf 1000 g Eis gegossen und mit konz. wäßriger HCl bis pH 1 angesäuert. Die organische Phase wurde abgetrennt und die wäßrige Phase 3mal mit je 200 cm³ Methylenchlorid nachextrahiert. Die vereinigten organischen Phasen wurden mit gesättigter wäßriger NaHCO₃-, gesättigter wäßriger NaCl-Lösung gewaschen und anschließend getrocknet (MgSO₄). Nach Chromatographie an 1000 g Kieselgel (Hexan/AeOEt) wurden 27 g (33 %) 16 erhalten.
   ¹H-NMR (100 Mhz, CDCl₃): 7,1-8,0 (m, 10H, arom. H), 2,2-3,3 (m, 3H, CH₂ und CH), 1,1 (d, 3H, CH₃).
5. 2-Methyl-7-(2-naphthyl)inden (17)
   Zu einer Lösung von 27 g (100 mmol) 16 in 200 cm³ THF/Methanol 2:1 wurden bei 0°C 3,8 g (100 mmol) NaBH₄ zugesetzt und 18 h bei Raumtemperatur gerührt. Die Reaktionsmischung wurde auf 100 g Eis gegossen, mit konz. wäßriger HCl bis pH 1 versetzt und mehrmals mit Et₂O extrahiert. Die vereinigten organischen Phasen wurden mit gesättigter wäßriger NaHCO₃-, gesättigter wäßriger NaCl-Lösung gewaschen und anschließend getrocknet (MgSO₄).
   Das Rohprodukt wurde in 500 cm³ Toluol aufgenommen, mit 1,5 g p-Toluolsulfonsäure versetzt und 2 h am Wasserabscheider zum Rückfluß erhitzt. Die Reaktionsmischung wurde 3mal mit 50 cm³ gesättigter wäßriger NaHCO₃-Lösung gewaschen und das Lösemittel im Vakuum entfernt. Nach Filtration über 200 g Kieselgel (Hexan/Methylenchlorid) wurden 18,4 g (72 %) 17 als farbloses Öl erhalten.
   ¹H-NMR (100 Mhz, CDCl₃): 7,0-8,0 (m, 10H, arom. H), 6,6 (m, 1H, CH), 3,0 (m, 2H, CH₂), 2,0 (m, 3H, CH₃).
6. Dimethylbis(2-methyl-4-(2-naphthyl)indenyl)silan (18)
   eine Lösung von 18 g (70 mmol) 17 in 70 cm³ H₂O- und O₂-freiem Toluol und 4 ml H₂O- und O₂-freiem THF wurden bei Raumtemperatur mit 26 cm³ (70 mmol) einer 20 %igen Lösung von Butyllithium in Toluol versetzt und 2 h auf 80°C erhitzt. Anschließend wurde die gelbe Suspension auf 0°C gekühlt und mit 4,5 g (35 mmol) Dimethyldichlorsilan versetzt. Die Reaktionsmischung wurde noch 1 h auf 80°C erhitzt und anschließend mit 50 cm³ H₂O gewaschen. Das Lösemittel wurde im Vakuum entfernt und der Rückstand aus Heptan bei -20°C umkristallisiert. Es wurden 19,8 g (54 %) 18 als farblose Kristalle erhalten.
   ¹H-NMR (100 MHz, CDCl₃): 7,0-8,1 (m, 20H, arom. H), 6,4 (m, 2H, H-C(3)), 4,0 (m, 2H, H-C(1)), -0,1 (1, 6H, CH₃Si).
7. rac-Dimethylsilandiylbis(2-methyl-4-(2-naphthyl)indenyl)-zirkoniumdichlorid (19)
   Eine Lösung von 10,5 g (19 mmol) 18 in 70 cm³ H₂O- und O₂-freiem Et₂O werden unter Argon bei Raumtemperatur mit 13,6 cm³ einer 20 %igen Lösung von Butyllithium in Toluol versetzt und anschließend 3 h zum Rückfluß erhitzt. Das Lösemittel wurde im Vakuum entfernt und der Rückstand mit 50 ml H₂O- und O₂-freiem Hexan über eine G3-Schlenkfritte filtriert, mit 50 ml H₂O- und O₂-freiem Hexan nachgewaschen und getrocknet (0,1 mbar, RT).
   Das Dilithiosalz wurde bei -78°C zu einer Suspension von 4,2 g (18 mmol) Zirkoniumtetrachlorid in 80 cm³ Methylenchlorid gegeben und im Verlauf von 18 h unter magn. Rühren auf Raumtemperatur erwärmt. Der Ansatz wurde über eine G3-Fritte filtriert und der Rückstand portionsweise mit insgesamt 400 cm³ Methylenchlorid nachextrahiert. Die vereinigten Filtrate wurden im Vakuum vom Lösemittel befreit und aus Methylenchlorid umkristallisiert. Es wurden 3,1 g (23 %) der racemischen und der meso-Form im Verhältnis 1:1 erhalten. Durch erneutes Umkristallisieren aus Methylenchlorid wurde der racemische Komplex in Form gelber Kristalle erhalten.
   ¹H-NMR (100 MHz, CDCl₃): 7,0-8,0 (m, 22H, arom. H), 6,9 (s, 2H, H-C(3)), 2,2 (s, 6H, CH₃), 1,3 (s, 6H CH₃Si). Massenspektrum: 729 M⁺, korrektes Zerfallsmuster.

### Vergleichsbeispiel D:

### Dimethylsilandiylbis(2-methyl-4-(9-phenanthryl)indenyl)zirkoniumdichlorid (24)

1. 2-(2'-(9"-Phenanthryl)benzyl)-propionsäure (20)
   Zu 23 g (1,0 mol) Natrium in 500 cm³ H₂O-freiem EtOH wurden bei Raumtemperatur 174 g (1,0 mol) Methylmalonsäurediethylester zugetropft. Anschließend wurden 347 g (1,0 mol) 2-(9-Phenanthryl)benzylbromid zugetropft und 3 h zum Rückfluß erhitzt. Bei Raumtemperatur wurden 168 g (3 mol) KOH gelöst in 600 cm³ H₂Ozugesetzt und weitere 4 h zum Rückfluß erhitzt. Das EtOH wurde abdestilliert und der Rückstand bis zur vollständigen Lösung mit H₂O versetzt und anschließend mit konzentrierter wässr. HCl bis pH 1 angesäuert. Der ausgefallene Niederschlag wurde abgesaugt, getrocknet und 1 h auf 130°C erhitzt. Man erhielt 286 g (84 %) 2-(2'-(9"-Phenanthryl)benzyl)propionsäure als Feststoff.
2. 2-Methyl-4-(9'-phenanthryl)-1-indanon (21)
   Eine Lösung von 200 g (0,59 mol) 2-(2'-(9"-Phenanthryl)benzyl)-propionsäure in 81 cm³ (1,2 mol) Thionylchlorid wurde 18 h bei Raumtemperatur gerührt. Überschüssiges Thionylchlorid wurde bei 10 mbar entfernt und das Säurechlorid in 600 cm³ Toluol aufgenommen. Die Lösung wurde bei 10°C zu einer Suspension von 86 g (0,64 mol) AlCl₃ in 1100 cm³ Toluol getropft und 1 h auf 80°C erhitzt. Die Reaktionsmischung wurde auf 2000 g Eis gegossen und mit konz. wässr. HCl bis pH 1 angesäuert. Die organische Phase wurde abgetrennt und die wässr. Phase 3mal mit je 200 cm³ Methyl-tert.-butylether nachextrahiert. Die vereinigten organischen Phasen wurden mit gesättigter wässr. NaHCO₃-, gesättigter wässr. NaCl-Lösung gewaschen und anschließend getrocknet (MgSO₄). Es wurden 151 g (56 %) 2-Methyl-4-(9'phenanthryl)-1-indanon erhalten, das ohne weitere Reinigung weiter umgesetzt wurde.
3. 2-Methyl-7-(9'-phenanthryl)inden (22)
   Eine Lösung von 100 g (0,31 mol) 2-Methyl-4-(9'-phenanthryl)-1-indanon in 1000 cm³ THF/Methanol 2:1 wurde bei 0°C portionsweise mit 11,7 g (0,31 mol) NaBH₄ versetzt und 18 h bei Raumtemperatur gerührt. Die Reaktionsmischung wurde auf 1000 g Eis gegossen, mit konz. wässr. HCl bis pH 1 versetzt und mehrmals mit Methyl-tert.-butylether extrahiert. Die vereinigten organischen Phasen wurden mit gesättigter wässr. NaHCO₃-, gesättigter wässr. NaCl-Lösung gewaschen. Das Lösemittel wurde im Vakuum entfernt und das Rohprodukt in 1000 cm³ Toluol aufgenommen, mit 3 g p-Toluolsulfonsäure versetzt und 2 h am Wasserabscheider zum Rückfluß erhitzt. Die Reaktionsmischung wurde 3mal mit 250 cm³ gesättigter wässr. NaHCO₃-Lösung gewaschen und das Lösemittel im Vakuum entfernt. Nach Chromatographie über Kieselgel (Hexan) wurden 64 g (68 %) 2-Methyl-7-(9'-phenanthryl)inden als farbloses Öl erhalten.
4. Dimethylbis(2-methyl-4-(9'-phenanthryl)indenyl)silan (23)
   Eine Lösung von 25 g (81 mmol) 2-Methyl-7-(9'-phenanthryl)inden in 250 cm³ H₂O- und O₂-freiem Toluol und 25 ml H₂O- und O₂-freiem THF wurden bei Raumtempertaur mit 30 cm³ (81 mmol) einer 20 %igen Lösung von Butyllithium in Toluol versetzt und 2 h auf 80°C erhitzt. Anschließend wurde die gelbe Suspension auf 0°C gekühlt und mit 5,1 g (40 mmol) Dimethyldichlorsilan versetzt. Die Reaktionsmischung wurde noch 1 h auf 80°C erhitzt und anschließend mit 200 cm³ H₂O gewaschen. Das Lösemittel wurde im Vakuum entfernt und der Rückstand durch Kristallisation (Hexan) gereinigt. Es wurden 13,2 g (49 %) Dimethylbis(2-methyl-4-(9'-phenanthryl)indenyl)silan als farbloser Feststoff erhalten.
5. Dimethylsilandiylbis(2-methyl-4-(9'-phenanthryl)indenyl)zirkoniumdichlorid (24)

Eine Lösung von 10 g (15 mmol) Dimethylbis(2-methyl-4-(9'phenanthryl)indenyl)silan in 50 cm³ H₂O- und O₂-freiem Et₂O wurden unter Argon bei Raumtemperatur mit 11 cm³ einer 20 %igen Lösung von Butyllithium in Toluol versetzt und anschließend 3 h zum Rückfluß erhitzt. Das Lösemittel wurde im Vakuum entfernt und der Rückstand mit 50 ml H₂O- und O₂-freiem Hexan über eine G3-Schlenkfritte filtriert, mit 100 ml H₂O- und O₂-freiem Hexan nachgewaschen und getrocknet (0,1 mbar, RT). Der Feststoff wurde bei -78°C zu einer Suspension von 3,5 g (15 mmol) Zirkoniumtetrachlorid in 100 cm³ Methylenchlorid gegeben und im Verlauf von 18 h unter magn. Rühren auf Raumtemperatur erwärmt. Der Ansatz wurde über eine G3 Fritte filtriert und der Rückstand portionsweise mit insgesamt 300 cm³ Methylenchlorid nachextrahiert. Die vereinigten Filtrate wurden im Vakuum vom Lösemittel befreit und erneut aus Dichlormethan (-30°C) umkristallisiert. Es wurden 3,5 g (28 %) der racemischen und der meso-Form im Verhältnis 1:1 erhalten. Durch erneutes Umkristallisieren aus Dichlormethan (0°C) wurde der racemische Komplex rac-Dimethylsilandiylbis(2-methyl-4-(9'phenanthryl)indenyl)zirkoniumdichlorid in Form gelber Kristalle erhalten.
¹H-NMR (100 MHz, CDCl₃): 7,0 - 8.1 u. 8,7 (m, 18 H, arom. H), 6,4 (s, 2H, H-C(3)), 2,2 (s, 6H, CH₃), 1,3 (s, 6H, CH₃Si).
Massenspektrum: 829 M⁺, korrektes Zerfallsmuster.

### Vergleichsbeispiel E:

### Dimethylsilandiylbis(2-methyl-4-(3',5'-diisopropylphenyl)indenyl)-zirkoniumdichlorid (26)

1. 2-Methyl-7-(3',5'-diisopropylphenyl)inden (25)
   Es wurde analog Beispiel D.1 - D.3 verfahren. An Stelle von 2-(9'-Phenanthryl)benzylbromid wurden aus 331,3 g (1,0 mol) 2-(3',5'diisopropylphenyl)benzylbromid 111 g (0,38 mol) 2-Methyl-7-(3',5'diisopropylphenyl)inden erhalten (23 g (1,0 mol) Natrium, 174 g (1,0 mol) Methylmalonsäurediethylester, 168 g (3,0 mol) KOH; 269 g (0,83 mol) 2-(2-(3',5'diisopropylphenyl)benzyl)-propionsäure, 195 g (1,64 mol) SOCl₂, 121,8 g (0,913 mol) AlCl₃; 165 g (0,54 mol) 2-Methyl-4-(3',5'diisopropylphenyl)-1-indanon; 20,4 g NaBH₄, 3 g p-TsOH).
2. Dimethylsilandiylbis(2-methyl-4-(3',5'-diisopropylphenyl)indenyl)-zirkoniumdichlorid (26)
   Es wurde analog Beispiel D.4 verfahren. An Stelle von 2-Methyl-7-(9'phenanthryl)inden wurden-aus 20 g (69 mmol) 2-Methyl-7-(3',5'-diisopropylphenyl)inden 15,6 g (70 %) Dimethylbis(2-methyl-4-(3',5'diisopropylphenyl)indenyl)silan (26 ml (69 mmol) Butyllithium (20 % in Toluol), 4,5 g (35 mmol) Dimethyldichlorsilan) erhalten.
   Die Komplexsynthese wurde analog Beispiel D.5 durchgeführt. An Stelle von Dimethylbis(2-methyl-4-(9-phenanthryl)indenyl)silan wurden aus 10 g (16 mmol) Dimethylbis(2-methyl-4(3',5'-diisopropylphenyl)indenyl)silan 6,9 g (54 %) der racemischen und der meso-Form im Verhältnis 1:1 erhalten (12 ml (232 mmol) Butyllithium (20 % in Toluol), 3,7 g (16 mmol) Zirkoniumtetrachlorid). Durch erneutes Umkristallisieren aus Chlorbenzol wurde der racemische Komplex rac-Dimethylsilandiylbis(2-methyl-4-(3',5'-diisopropylphenyl)indenyl)zirkoniumdichlorid in Form gelber Kristalle erhalten.
   ¹H-NMR (100 MHz, CDCl₃): 7,0 - 8,3 (m, 12 H, arom. H), 6,6 (s, 2H, H-C(3), 2,5 - 3,1 (m, 4H, iPr-CH), 2,1 (s, 6H, CH₃), 1,0 - 1, 3 (m, 30H, iPr-CH₃ u. CH₃Si). Massenspektrum: 797 M⁺. korrektes Zerfallsmuster.

### Beispiel F

### Dimethylsilandiylbis(2-methyl-4-phenyl-6-isopropylindenyl)-zirkoniumdichlorid (28)

1. 2-Methyl-5-isopropyl-7-phenylinden (27)
   Es wurde analog Beispiel D.1 - D.3 verfahren. An Stelle von 2-(9'-Phenanthryl)benzylbromid wurden aus 289 g (1,0 mol) 2-Phenyl-4-isopropylbenzylbromid 85 g (0,34 mol) 2-Methyl-7(3',5'diisopropylphenyl)inden erhalten (23 g (1,0 mol) Natrium, 174 g (1,0 mol) Methylmalonsäurediethylester, 168 g (3,0 mol) KOH; 251 g (0,89 mol) 2-(2'-phenyl-4'-isopropylbenzyl)propionsäure, 212 g (1,78 mol) SOCl₂, 130 g (0,98 mol) AlCl₃; 127 g (0,48 mol) 2-Methyl-4-phenyl-6-isopropyl-1-indanon; 18,1 g NaBH₄, 2,5 g p-TsOH).
2. Dimethylsilandiylbis(2-methyl-4-phenyl-6-isopropyl)indenyl)-zirkoniumdichlorid (28)
   Es wurde analog Beispiel D.4 verfahren. An Stelle von 2-Methyl-7-(9'phenanthryl)inden wurden aus 20 g (80 mmol) 2-Methyl-5-isopropyl-7-phenylinden 13,5 g (61 %) Dimethylbis(2-methyl-4-phenyl-6-isopropyl)indenyl)silan (30 ml (80 mmol) Butyllithium (20 % in Toluol), 5,2 g (40 mmol) Dimethyldichlorsilan) erhalten.
   Die Komplexsynthese wurde analog Beispiel D.5 durchgeführt. An Stelle von Dimethylbis(2methyl-4-(9'-phenanthryl)indenyl)silan wurden aus 10 g (14 mmol) Dimethylbis(2-methyl-4-phenyl-6-isopropyl)indenyl)silan 4,4 g (44 %) der racemischen und der meso-Form im Verhältnis 1:1 erhalten (10 ml (28 mmol) Butyllithium (20 % in Toluol), 3,3 g (14 mmol) Zirkoniumtetrachlorid). Durch erneutes Umkristallisieren aus Dichlormethan wurde der racemische Komplex rac-Dimethylsilandiylbis(2-methyl-4-phenyl-6-isopropyl)indenyl)-zirkoniumdichlorid in Form gelber Kristalle erhalten.
   ¹H-NMR (100 MHz, CDCl₃): 7,0 - 8,3 (m, 12 H, arom. H), 6,6 (s, 2H, H-C(3), 2,5 -2,9 (m,2H, iPr-CH), 2,1 (s, 6H, CH₃), 1,2 (s, 6H, CH₃Si), 1,1 (d, 12H, iPr-CH₃)- Massenspektrum: 712 M⁺, korrektes Zerfallsmuster.

### Vergleichsbeispiel G:

### Dimethylsilandiylbis(2-methyl-4-(5',6',7',8'-tetrahydro-1'-naphthyl)-indenyl)zirkoniumdichlorid (30)

1. 2-Methyl-7-(5',6',7',8'-tetrahydro-1'-naphthyl)inden (29)
   Es wurde analog Beispiel D.1 - D.3 verfahren. An Stelle von 2-(9'-Phenanthryl)benzylbromid wurden aus 301 g (1,0 mol) 2-(5',6',7',8'tetrahydro-1'-naphthyl)benzylbromid 160 g (0,61 mol) 2-Methyl-7-(5',6',7',8'-tetrahydro-1'-naphthyl)inden erhalten (23 g (1,0 mol) Natrium, 174 g (1,0 mol) Methylmalonsäurediethylester, 168 g (3,0 mol) KOH; 270 g (0,92 mol) 2-(2-(5',6',7',8'-tetrahydro-1'-naphthyl)benzyl)-propionsäure, 219 g (1,84 mol) SOCl₂, 133 g (1,0 mol) AlCl₃; 222 g (0,80 mol) 2-Methyl-4-(5',6',7',8'-tetrahydro-1'-naphthyl)-1-indanon; 30 g (0,80 mol) NaBH₄, 4 g p-TsOH).
2. Dimethylsilandiylbis(2-methyl-4-(5',6',7',8'-tetrahydro-1'-naphthyl)-indenyl)-zirkoniumdichlorid (30)
   Es wurde analog Beispiel D.4 verfahren. An Stelle von 2-Methyl-7-(9'phenanthryl)inden wurden aus 20 g (76 mmol) 2-Methyl-7-(5',6',7',8'tetrahydro-1'-naphthyl)inden 10,5 g (48 %) Dimethylbis(2-methyl-4-(5',6',7',8'-tetrahydro-1'-naphthyl)indenyl)silan (28 ml (76 mmol) Butyllithium (20 % in Toluol), 4,9 g (38 mmol) Dimethyldichlorsilan) erhalten.
   Die Komplexsynthese wurde analog Beispiel D.5 durchgeführt. An Stelle von Dimethylbis(2-methyl-4-(9'-phenanthryl)indenyl)silan wurden aus 10 g (17 mmol) Dimethylbis(2-methyl-4-(5',6',7',8'-tetrahydro-1'naphthyl)indenyl)silan 8,1 g (65 %) der racemischen und der meso-Form im Verhältnis 1:1 erhalten (13 ml (34 mmol) Butyllithium (20 % in Toluol), 3,9 g (17 mmol) Zirkoniumtetrachlorid). Durch erneutes Umkristallisieren aus Toluol wurde der racemische Komplex rac-Dimethylsilandiylbis(2-methyl-4-(5',6',7',8'-tetrahydro-1'-naphthyl)-indenyl)zirkoniumdichlorid in Form gelber Kristalle erhalten.
   ¹H-NMR (100 MHz, CDCl₃): 7,0 - 8,3 (m, 12 H, arom. H), 6,6 (s, 2H, H-C(3), 2,7 (m, 8H,CH₂), 2,1 (s, 6H, CH₃), 1,8 (m, 8H, CH₂), 1,2 (s, 6H. CH₃Si). Massenspektrum: 737 M⁺, korrektes Zerfallsmuster.

### Beispiel H

### Dimethyisilandiylbis(2-methyl-4-(1-naphthyl)-6-isopropyl)indenyl)-zirkoniumdichlorid (32)

1. 2-Methyl-5-isopropyl-7-(1-naphthyl)-inden (31)
   Es wurde analog Beispiel D.1 - D.3 verfahren. An Stelle von 2-(9'-Phenanthryl)benzylbromid wurden aus 339 g (1,0 mol) 2-(1-Naphthyl)-4-isopropylbenzylbromid 101 g (0,34 mol) 2Methyl-5-isopropyl-7-(1-naphthyl)-inden erhalten (23 g (1,0 mol) Natrium, 174 g (1,0 mol) Methylmalonsäurediethylester, 168 g (3,0 mol) KOH; 296 g (0,89 mol) 2-(2'-(1-naphthyl)-4'-isopropyl-benzyl)propionsäure, 212 g (1,78 mol) SOCl₂, 130 g (0,98 mol) AlCl₃; 151 g (0,48 mol) 2-Methyl-4-(1-naphthyl)-6-isopropyl-1-indanon; 18,1 g NaBH₄, 2,5 g p-TsOH).
2. Dimethylsilandiylbis(2-methyl-4-(1-naphthyl)-6-isopropyl)indenyl)-zirkoniumdichlorid (32)

Es wurde analog Beispiel D.4 verfahren. An Stelle von 2-Methyl-7-(9'phenanthryl)inden wurden aus 24 g (80 mmol) 2-Methyl-5-isopropyl-7-(1-naphthyl)-inden 15,91 g (61 %) Dimethylbis(2-methyl-4-(1-naphthyl)-6-isopropyl)indenyl)silan (30 ml (80 mmol) Butyllithium (20 % in Toluoi), 5,2 g (40 mmol) Dimethyldichlorsilan) erhalten.

Die Komplexsynthese wurde analog Beispiel D.5 durchgeführt. An Stelle von Dimethylbis(2methyl-4-(9'-phenanthryl)indenyl)silan wurden aus 9,1 g (14 mmol) Dimethylbis(2-methyl-4-(1-naphthyl)-6-isopropyl)-indenyt)silan 5,0 g (44 %) der racemischen und der meso-Form im Verhältnis 1:1 erhalten (10 ml (28 mmol) Butyllithium (20 % in Toluol), 3,3 g (14 mmol) Zirkoniumtetrachlorid). Durch erneutes Umkristallisieren aus Dichlormethan wurde der racemische Komplex rac-Dimethylsilandiylbis(2-methyl-4-phenyl-6-isopropyl)indenyl)-zirkoniumdichlorid in Form gelber Kristalle erhalten.
¹H-NMR (100 MHz, CDCl₃): 7,0 - 8,3 (m, 16 H, arom. H), 6,5 (s, 2H, H-C(3)), 2,5 -2,9 (m, 2H, iPr-CH), 2,2 (s, 6H, CH₃), 1,1 (s, 6H, CH₃Si), 1,0 (d, 12H, iPr-CH₃). Massenspektrum: 811 M⁺, korrektes Zerfallsmuster.

### II. Trägerung der Metallocene aus Beispiel A bis H

### Trägerungsbeispiele A bis H

Wie auf Seite 14 bis 15 beschrieben, wurde zunächst die geträgerte Aluminiumverbindung (Methylaluminoxan auf Kieselgel Garce/Davison 948 "FMAO auf SiO₂" hergestellt. Der isolierte Feststoff enthielt 20.6 Gew.-% Aluminium.

40 g "FMAO auf SiO₂" (305 mmol Al) wurden in einem rührbaren Gefäß in 250 cm³ Toluol suspendiert und auf 0°C abgekühlt. Gleichzeitig wurden 450 mg des Metallocens (aus den Beispielen A bis H) in 200 cm³ Toluol gelöst und innerhalb von 30 Minuten zur Suspension zugetropft. Es wurde langsam unter Rühren auf 20°C erwärmt, die Suspension nimmt dabei eine blaßrote Farbe an. Nach 1 h bei 60°C wird wieder auf 20°C abgekühlt, filtriert und der Feststoff 3mal mit je 200 cm³ Toluol und 1 mal mit 200 cm³ Hexan gewaschen. Der verbleibende, hexanfeuchte Filterrückstand wurde im Vakuum getrocknet. Ausbeute an frei fließendem geträgertem Katalysator siehe Tabelle "Trägerungsbeispiele". Gleichfalls enthält diese Tabelle die mit den verschiedenen Metallocenen erzielbaren Gehalte an fixiertem Metallocen auf dem Träger.

| Trägerungsbeispiele A - H (Tabelle) | | |
|---|---|---|
| Metallocen aus Synthese-Beispiel | Ausbeute an Katalysator (g) | Metallocengehalt des Katalysators [mgZirkonocen/gKat] |
| A | 35,7 | 10,1 |
| B | 37,8 | 10,7 |
| C | 36,5 | 10,3 |
| D | 35,0 | 10,2 |
| E | 39,1 | 10,0 |
| F | 38,5 | 9,2 |
| G | 39,0 | 10,9 |
| H | 39,2 | 10,5 |

### III. Polymerisationsbeispiele

### Vergleichsbeispiele 1 - 10

Ein trockener 24 dm³-Reaktor wurde mit Propylen gespült und mit 12 dm³ flüssigem Propylen und 22 cm³ einer hexanischen Triisobutylaluminiumlösung (8 mmol Al, 2 cm³ Triisobutylaluminium verdünnt mit 20 cm³ Hexan) befüllt und die Reaktorrührung auf 250 UpM eingestellt. Nach Zugabe eines Drittels der für die Polymerisation insgesamt vorgesehenen Ethylenmenge (siehe Tabelle 1, Ethylenvorlage), wurden 0,7 g des in Trägerungs-Beispiel B hergestellten Katalysators, suspendiert in 25 cm³ eines entaromatisierten Benzinschnittes mit dem Siedebereich 100 bis 120°C, in den Reaktor gegeben. Der Reaktor wurde auf die Polymerisationstemperatur von 65°C aufgeheizt (7,5°C/min) und 1 h bei dieser Polymerisationstemperatur durch Kühlung des Reaktormantels gehalten. Während dieser Polymerisationszeit wurde kontinuierlich weiteres Ethylengas in den Reaktor dosiert (siehe Tabelle 1, Ethylendosierung). Gestoppt wurde die Polymerisation durch schnelles Abgasen der überschüssigen Monomeren. Das Polymer wurde im Vakuum getrocknet. Polymerausbeute, Metallocenaktivitäten und Produktdaten sind der Tabelle 1 zu entnehmen.

### Vergleichsbeispiele 11 - 20

Die Beispiele 1 - 10 wurden mit dem im Trägerungsbeispiel D hergestellten Katalysator wiederholt. Ethylenmengen, Polymerausbeute, Metallocenaktivitäten und Produktdaten sind der Tabelle 2 zu entnehmen.

### Vergleichsbeispiele 21 - 30

Die Beispiele 1 - 10 wurden mit dem nicht erfindungsgemäßen Metallocenkatalysator hergestellt nach Trägerungsbeispiel A durchgeführt. Die Ergebnisse zeigen, daß mit diesem Katalysatorsystem die Polymerschmelzpunkte zwar in gleicher Weise abgesenkt werden können, daß das erzielbare Molmassenniveau jedoch deutlich niedriger liegt als mit den Katalysatorsystemen B und D in den entsprechenden Vergleichsbeispielen 1 bis 20. Polymerausbeuten, Metallocenaktivitäten und Produktdaten sind der Tabelle 3 zu entnehmen.

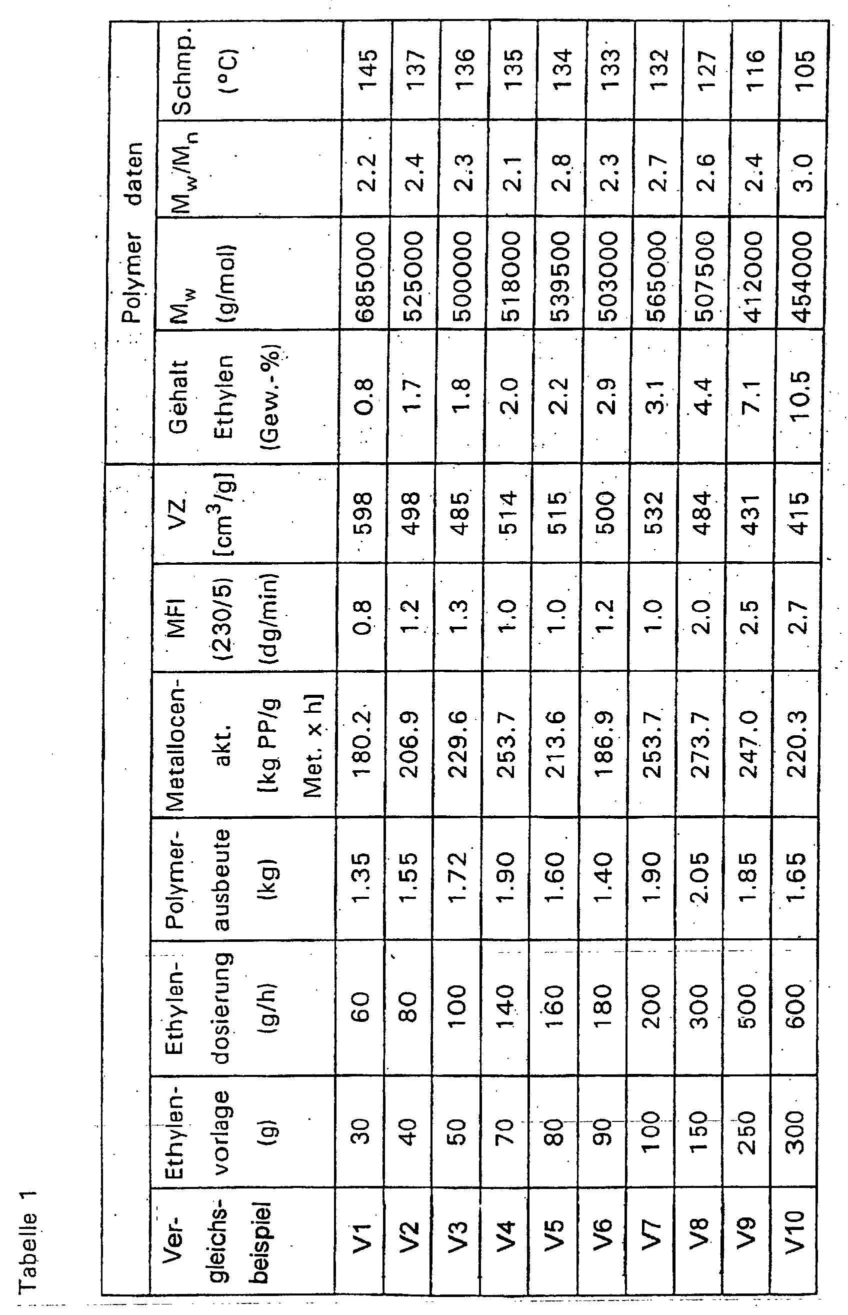

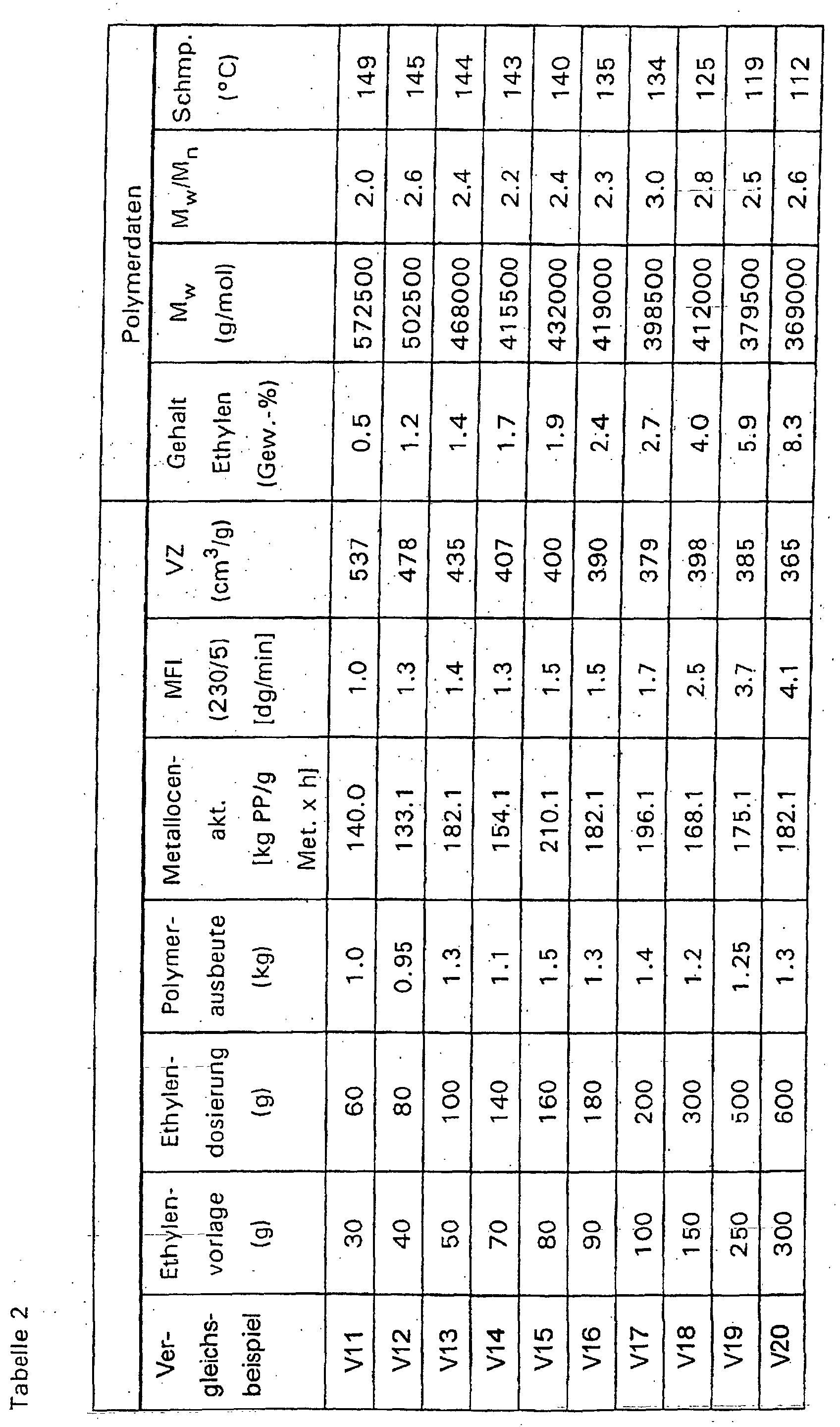

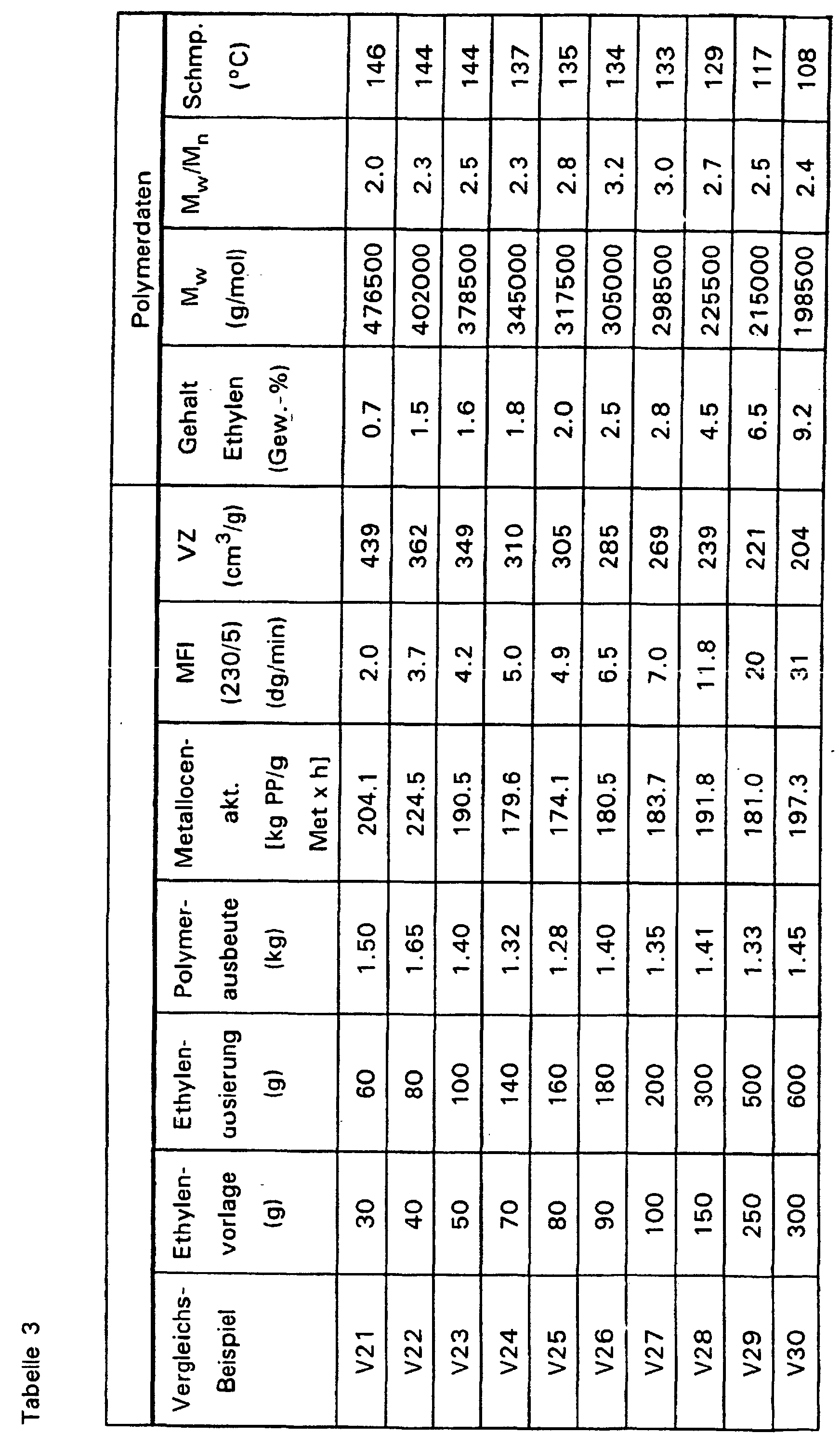

### Beispiele 31 - 35

Beispiel 7 wurde wiederholt. Als Katalysator wurden jedoch die in der Tabelle 4 aufgeführten geträgerten Metallocene verwendet. Die Ergebnisse der Polymerisation sind ebenfalls der Tabelle 4 zu entnehmen.

### Vergleichsbeispiele 36 - 42

Analog zu den Beispielen 31 35 wurde Beispiel 7 mit den nicht erfindungsgemäßen Metallocenen

| | |
|---|---|
| rac-Dimethylsilandiylbis(indenyl)ZrCl₂ | (Beispiel 36) |
| rac-Dimethylsilandiylbis(2-methylindenyl)ZrCl₂ | (Beispiel 37) |
| rac-Dimethylsilandiylbis(2,4-dimethylindenyl)ZrCl₂ | (Beispiel 38) |
| rac-Dimethylsilandiylbis(2,4,6-trimethylindenyl)ZrCl₂ | (Beispiel 39) |
| rac-Dimethylsitandiylbis(2,4,7-trimethylindenyl)ZrCl₂ | (Beispiel 40) |
| rac-Dimethylsilandiylbis(2,5,6-trimethylindenyl)ZrCl₂ | (Beispiel 41) |
| rac-Dimethylsilandiylbis(2-methyl-4,5-benzoindenyl)ZrCl₂ | (Beispiel 42) |

wiederholt.

In keiner der Polymerisationen konnte ein Copolymer mit hoher Molmasse erhalten werden, die VZ-Werte die erzielt werden konnten, lagen generell unter 200 cm³/g, in einigen Fällen sogar deutlich unter 100 cm³/g.

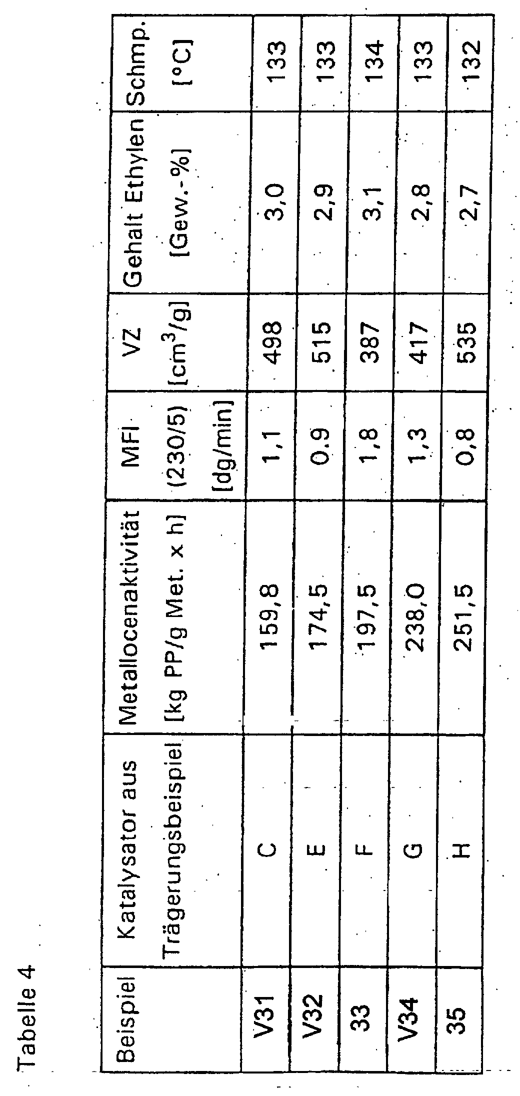

### Vergleichsbeispiele 43 - 48

Ein trockener 24 dm³-Reaktor wurde mit 10 I eines entaromatisierten Benzinschnittes mit dem Siedebereich 100 bis 120°C gefüllt.

Dann wurde der Gasraum durch fünfmaliges Aufdrücken von 2 bar Propylen und Entspannen gespült. Nach Zugabe von 2000 g Propylen und der in Tabelle 5 angegebenen Ethylenvorlage wurden 10 cm³ toluolische Methylaluminoxanlösung (entsprechend 15 mmol Al, Molmasse nach kryoskopischer Bestimmung 1 200 g/mol) zugegeben und der Reaktorinhalt auf 60°C aufgeheizt. 2,0 mg Dimethylsilandiylbis(2-methyl-4-(1-naphthyl)-indenyl)zirkondichlorid wurden in 10 cm³ der toluolischen Methylaluminoxanlösung (entsprechend 15 mmol Al) gelöst und ebenfalls in den Reaktor gegeben. Während der nun zweistündigen Polymerisationszeit wurde die in Tabelle 5 angegebene Ethylenmenge ("Ethylendosierung") zusätzlich zudosiert. Gestoppt wurde die Polymerisation durch schnelles Abgasen der überschüssigen Monomeren. Das Polymer wurde vom Benzin abgetrennt und im Vakuum bei 100°C getrocknet. Polymerausbeuten, Metallocenaktivitäten und Produktdaten siehe Tabelle 5.

### Beispiel 49 - 54

Beispiel 45 wurde wiederholt, jedoch statt des Metallocens Dimethylsilandiylbis(2-methyl-4-(1-naphthyl)indenylzirkondichlorid wurden die **Metallocene**

| | |
|---|---|
| Dimethylsilandiylbis(2-methyl-4-(2-naphthyl)indenyl)ZrCl₂ | (Beispiel 49) |
| Dimethylsilandiylbis(2-methyl-4-(9-phenanthryl)indenyl)ZrCl₂ | (Beispiel 50) |
| Dimethylsilandiylbis(2-methyl-4-(3',5'-diisopropylphenyl) indenyl)ZrCl₂ | (Beispiel 51) |
| Dimethylsilandiylbis(2-methyl-4-phenyl-6-isopropyl)-indenyl)ZrCl₂ | (Beispiel 52) |
| Dimethylsilandiylbis(2-methyl-4-(5',6',7',8'-tetrahydro-1'-naphthyl)indenyl)ZrCl₂ | (Beispiel 53) |
| Dimethylsilandiylbis(2-methyl-4-(1-naphthyl)-6-isopropyl)indenyl)ZrCl₂ | (Beispiel 54) |

verwendet. Die Ergebnisse der Polymerisationen sind der Tabelle 5 zu entnehmen.

### Vergleichsbeispiel 55

Beispiel 45 wurde wiederholt, als Metallocen wurde jedoch die nicht erfindungsgemäße Verbindung Dimethylsilandiylbis(2-methyl-4-phenylindenyl)-zirkondichlorid verwendet. Die Ergebnisse der Polymerisation sind in Tabelle 5 aufgeführt. Es wird deutlich, daß die mit diesem Metallocen erzielbare Molmasse deutlich unter dem Niveau liegt, das mit den erfindungsgemäßen Metallocenen erreicht werden kann.

Darüberhinaus wurde Vergleichsbeispiel 55 auch mit den in den Vergleichsbeispielen 36 - 42 verwendeten Metallocenen wiederholt. Die Molmassen der so hergestellten Copolymere erreichten maximale VZ-Werte von 137 cm³/g und liegen somit nochmals tiefer, als mit dem in Beispiel 55 angeführten nicht erfindungsgemäßen Metallocenen erreicht werden kann.

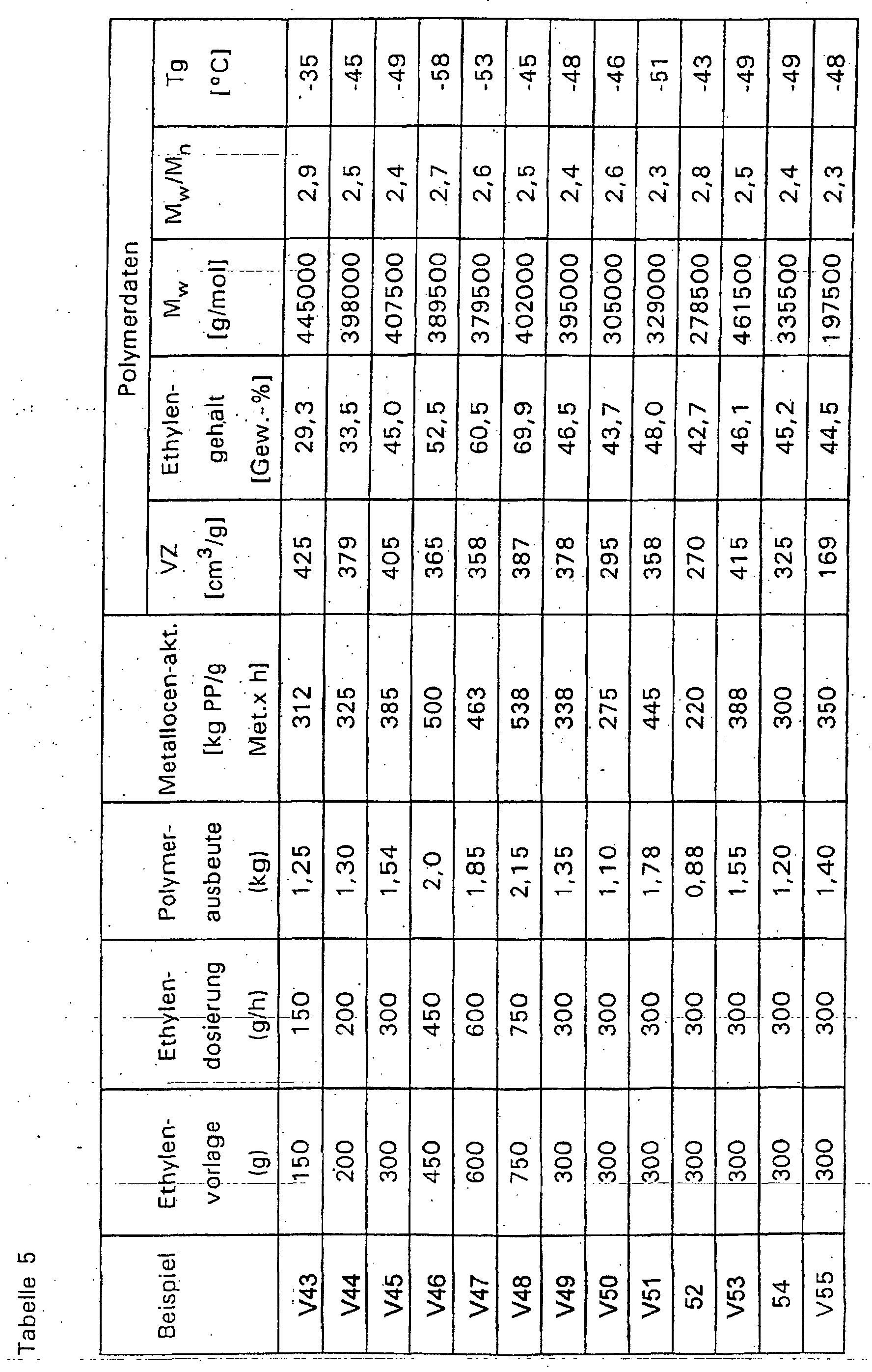

Mit den erfindungsgemäßen Metallocenen können auch sogenannte Reaktorblends hergestellt werden. Beispielsweise wird dazu in einer ersten Polymerisationsstufe ein Homopolymer hergestellt und in einer zweiten Stufe ein Copolymer.

Einige Beispiele sollen dieses Prinzip näher erläutern.

### Vergleichsbeispiel 56

Ein trockener 150 dm³ Reaktor wurde mit Stickstoff gespült und bei 20°C mit 80 dm³ eines entaromatisierten Benzinschnittes mit dem Siebereich 100 bis 120°C gefüllt. Dann wurde der Gasraum durch fünfmaliges Aufdrücken von 2 bar Propylen und Entspannen Stickstoff-frei gespült. Nach Zugabe von 50 I flüssigem Propylen wurden 64 cm³ toluolische Methylaluminiumoxanlösung (entsprechend 100 mmol Al, Molmasse nach kryoskopischer Bestimmung 1080 g/mol) zugegeben und der Reaktorinhalt auf 60°C aufgeheizt. Durch Zudosierung von Wasserstoff wurde ein Wasserstoffgehalt im Gasraum des Reaktors von 2,0 % eingestellt und später dann während der 1. Polymerisationsstufe durch Nachdosierung konstant gehalten.

8,0 mg Dimethylsilandiylbis(2-methyl-4-(3',5'-diisopropylphenyl)-indenyl)-zirkondichlorid wurden in 32 cm³ der toluolischen Methylaluminiumoxanlösung (entsprechend 50 mmol Al) gelöst und nach 15 Minuten in den Reaktor gegeben. Die Polymerisation erfolgte nun in einer 1. Polymerisationsstufe bei 60°C 5 h lang. Danach wurde auf 3 bar Reaktordruck abgegast und 2000 g Ethylengas zugeführt. Der Reaktordruck stieg dabei auf 8 bar an und bei 50°C wurden weitere 14 h polymerisiert, bevor die Reaktion mit CO₂-Gas gestoppt wurde.

Es wurden 19.9 kg Blockcopolymer erhalten, entsprechend einer Metallocenaktivität von 131 kg Copolymer/g Metallocen x h. VZ = 345 cm³/g; MFl (230/5) = 1.9 dg/min; MFI (230 /2.16) = 0.7 dg/min; Schmelzpunkt des Polymers der 1 . Polymerisationsstufe: 159°C; Glastemperatur des Polymers der 2. Polymerisationsstufe: -46°C; das Blockcopolymer enthielt 7.8 Gew.-% Ethylen; die Fraktionierung des Produktes ergab folgende Zusammensetzung:
79 Gew.-% Homopolymer, 21 Gew.-% Copolymer, wobei das Copolymer einen Ethylengehalt von 37,2 Gew.-% aufwies. Die mittlere Blocklänge C₂ im Copolymer war 1,9.

### Vergleichsbeispiel 57

Beispiel 56 wurde wiederholt, die Temperatur in der 2. Polymerisationsstufe betrug statt 50°C jedoch 60°C und die Polymerisationsdauer war statt 14 h nur 10 h.

Es wurde 20.8 kg Blockcopolymer erhalten, entsprechend einer Metallocenaktivität von 173 kg Copolymer/g Metallocen x h. VZ = 305 cm³/g; MFI (230/5) = 5.3 dg/min; MFI (230/2.16) = 2.0 dg/min; Schmelzpunkt des Polymers der 1. Polymerisationsstufe = 159°C; Glastemperatur des Polymers der 2. Polymerisationsstufe: -50°C; das Blockcopolymer enthielt 8.4 Gew.-% Ethylen; die Fraktionierung des Produktes ergab folgende Zusammensetzung:
68 Gew.-% Homopolymer, 32 Gew.-% Copolymer, wobei das Copolymer einen Ethylengehalt von 26.2 Gew.-% aufwies. Die mittlere Blocklänge C₂ im Copolymer war 2.0.

### Vergleichsbeispiel 58

Beispiel 57 wurde wiederholt, statt 2000 g Ethylen in der 2. Polymerisationsstufe wurden jedoch 3000 g Ethylen eingesetzt. Es wurden 21.5 kg Blockcopolymer erhalten, entsprechend einer Metallocenaktivität von 1 79 kg Copolymer/g Metallocen x h.
VZ = 285 cm³/g; MFI (230/5) = 5.6 dg/min; MFI (230/2.16) = 2.1 dg/min; Schmelzpunkt des Polymers der 1. Polymerisationsstufe: 160°C; Glastemperatur des Polymers der 2. Polymerisationsstufe: -52°C; Das Blockcopolymer enthielt 14.1 Gew.-% Ethylen. Die Fraktionierung des Produktes ergab folgende Zusammensetzung:
72,5 Gew.-% Homopolymer, 27,5 Gew.-% Copolymer, wobei das Copolymer einen Ethylengehalt von 51,3 Gew.-% aufwies.

### Vergleichsbeispiel 59

Beispiel 57 wurde wiederholt, statt 2000 g Ethylen in der 2. Polymerisationsstufe wurden jeodch 4000 g Ethylen verwendet. Es wurden 22.0 kg Blockcopolymer erhalten, entsprechend einer Metallocenaktivität von 184 kg Copolymer/g Metallocen x h.
VZ = 292 cm³/g; MFI (230/5) = 5.3 dg/min; MFI (230/2.16) = 2.3 dg/min; Schmelzpunkt des Polymers der 1. Polymerisationsstufe: 160°C; Glastemperatur des Polymers der 2. Polymerisationsstufe: -53°C; Das Blockcopolymer enthielt 20.6 Gew.-% Ethylen. Die Fraktionierung des Produktes ergab folgende Zusammensetzung:
66.5 Gew.-% Homopolymer; 33.5 Gew.-% copolymer, wobei das Copolymer einen Ethylengehalt von 61.5 Gew.-% aufwies.

### Vergleichsversuch zu Vergleichsbeispiel 57

Es wurde verfahren wie bei Beispiel 57, als nicht erfindungsgemäßes Metallocen wurde jedoch Dimethylsilandiylbis(2-methyl-4-phenyl-1-indenyl)zirkondichlorid verwendet. Es wurden 20.0 kg Blockcopolymer erhalten.
VZ = 225 cm³/g; MFI (230/5) = 14 dg/min; MFI (230/2.16) = 4.1 dg/min; Schmelzpunkt des Polymers der 1. Polymerisationsstufe 159°C; Glastemepratur des Polymers der 2. Polymerisationsstufe: -45°C; das Blockcopolymere enthielt 8.2 Gew.-% Ethylen.

Die Fraktionierung des Produktes ergab folgende Zusammensetzung: 70 Gew.-% Homopolymer; 30 Gew.-% Copolymer, wobei das Copolymer einen Ethylengehalt von 27.3 Gew.-% aufwies. Die mittlere Blocklänge C₂ im Copolymer war 2.5. Der Vergleichsversuch zeigt, daß die hohe Molmasse aus **Vergleichsbeispiel 57 nicht erreicht werden kann**

Mit den erfindungsgemäßen Metallocenen können auch hochmolekulare Terpolymere hergestellt werden. Einige Beispiele sollen das Prinzip näher erläutern:

### Vergleichsbeispiele 60 - 64

Es wurde verfahren wie in Beispiel 45, zusätzlich wurden jedoch noch 100 g eines weiteren Monomers in den Reaktor vorgelegt (Art des Monomers und Polymerisationsergebnisse siehe Tabelle 6).

**Tabelle 6**

| Vergleichsbeispiel | Monomer | Metallocen-akt. [kg PP/g Met.x.h] | VZ [cm³/g] | Gehalt an Comonomer (Gew.-%) | |
|---|---|---|---|---|---|
| | | | | Ethylen | weiteres Monomer |
| 60 | 1-Buten | 305 | 349 | 40.8 | 3.0 |
| 61 | 4-Methyl-1-penten | 336 | 328 | 44.0 | 2.3 |
| 62 | 1-Hexen | 380 | 400 | 42.6 | 3.2 |
| 63 | Ethylidennorbornen | 264 | 305 | 41.5 | 2.4 |
| 64 | 1,4-Hexadien | 288 | 278 | 45.2 | 2.8 |

Mit den erfindungsgemäßen Metallocenen können auch hochmolekulare Copolymere mit höheren Olefinen als Ethylen hergestellt werden. Einige Beispiele sollen das Prinzip erläutern:

### Vergleichsbeispiele 65 - 69

Es wurde verfahren wie in Beispiel 6, an Stelle von Ethylen wurden in gleicher Menge.jedoch die Olefine aus Tabelle 7 als Comonomer verwendet. Ergebnisse der Polymerisationen siehe ebenfalls Tabelle 7.

**Tabelle 7**

| Vergleichsbeispiel | Comonomer | Metallocen-akt. [kg PP/g Met.x.h] | VZ [cm³/g] | Gehalt Comonomer [Gew.-%] |
|---|---|---|---|---|
| V65 | 1-Buten | 154.2 | 452 | 2.4 |
| V66 | 4-Methyl-1-penten | 107.3 | 437 | 2.6 |
| V67 | 1-Hexen | 192.5 | 490 | 3.0 |
| V68 | 1-Octen | 124.5 | 417 | 2.2 |
| V69 | Ethylidennorbornen | 139.5 | 329 | 1.7 |

## Patentansprüche

1. Katalysatorkomponente zur Herstellung eines hochmolekularen Copolymeren mit der allgemeinen Formel I 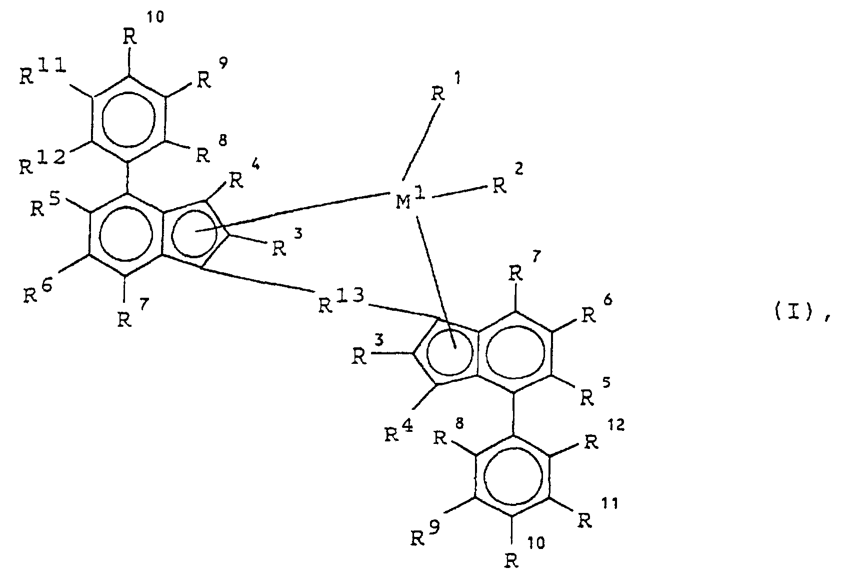 worin
M¹ ein Metall der Gruppe IVb, Vb oder Vlb des Periodensystems ist,
R¹ und R² gleich sind und eine C₁-C₄-Alkylgruppe oder ein Halogenatom bedeuten, die Reste R³ gleich oder verschieden sind und eine C₁-C₁₀-Alkylgruppe bedeuten, R⁴ und R⁷ Wasserstoff bedeuten, R⁵ und R⁶ verschieden sind und eine C₁-C₄-Alkylgruppe oder Wasserstoff bedeuten, R⁸ bis R¹² gleich oder verschieden sind und die für R³ genannten Bedeutungen besitzen, oder Wasserstoff sind, oder zwei oder mehr benachbarte Reste R⁸ bis R¹² mit den sie verbindenden Atomen einen oder mehrere aromatische oder aliphatische Ringe bilden,
R¹³ 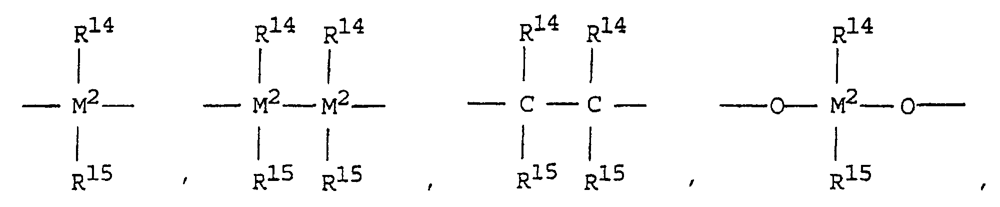 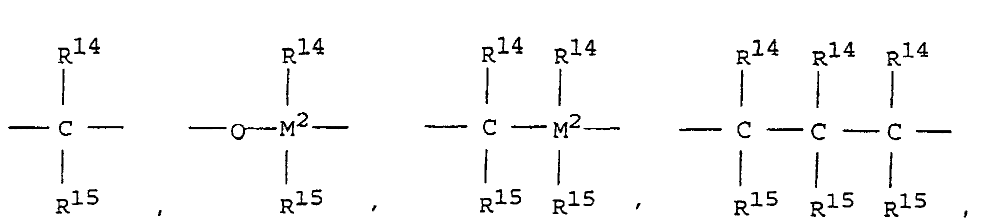 =BR¹⁴. =AIR¹⁴, -Ge-, -O-, -S-, =SO, =SO₂, =NR¹⁴, =CO, =PR¹⁴ oder =P(O)R¹⁴ ist, wobei R¹⁴ und R¹⁵ gleich oder verscheiden sind und ein Wasserstoffatom, ein Halogenatom, eine C₁-C₁₀-, insbesondere C₁-C₄-Alkylgruppe, eine C₁-C₁₀-Fluoralkyl-, insbesondere CF₃-Gruppe, eine C₆-C₁₀-, insbesondere C₆-C₈-Aryl-, eine C₆-C₁₀-Fluoraryl-, insbesondere Pentrafluorphenylgruppe, eine C₁-C₁₀-, insbesondere C₁-C₄-Alkoxygruppe, inbesondere Methoxygruppe, eine C₂-C₁₀-, insbesondere C₂-C₄-Alkenylgruppe, eine C₇-C₄₀-, insbesondere C₇-C₁₀-Arylalkylgruppe, eine C₈-C₄₀-, insbesondere C₈-C₁₂-Arylalkenylgruppe, eine C₇-C₄₀-, insbesondere C₇-C₁₂-Alkylarylgruppe bedeuten oder R¹⁴ und R¹⁵ jeweils mit den sie verbindenden Atomen einen Ring bilden und M² Silizium, Germanium oder Zinn ist.

2. Katalysatorkomponente nach Anspruch 1, bei der M² Zirkon ist, R¹ und R² gleich sind und Chlor oder eine Methylgruppe bedeuten, die Reste R³ gleich sind und eine Methyl- oder Ethylgruppe bedeuten,
mindestens zwei der Reste R⁸, R⁹, R¹⁰, R¹¹ oder
R¹² von Wasserstoff verschieden sind und mindestens einen aromatischen Ring bilden, der bevorzugt 6-gliedrig ist, oder wenn die Reste R⁸, R⁹, R¹⁰, R¹¹ oder R¹² Wasserstoff sind, R⁵ und/oder R⁶ eine C₁-C₄-Alkylgruppe bedeuten,
und R¹³ 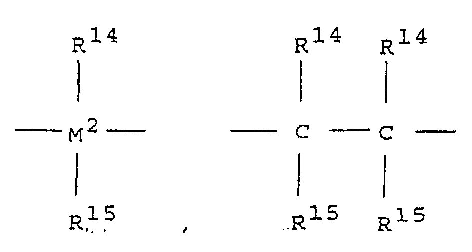 bedeutet, wobei M² Silizium bedeutet und R¹⁴ und R¹⁵ gleich oder verschieden sind und eine C₁-C₄-Alkylgruppe oder eine C₆-C₁₀-Arylgruppe bedeuten.

3. Katalysatorsystem zur Herstellung eines hochmolekularen Copolymeren enthaltend mindestens eine Katalsatorkomponente gemäß Anspruch 1 oder 2 und mindestens einen Cokatalysator, bevorzugt ein Aluminoxan der Formel IIa und/oder der Formel IIb, 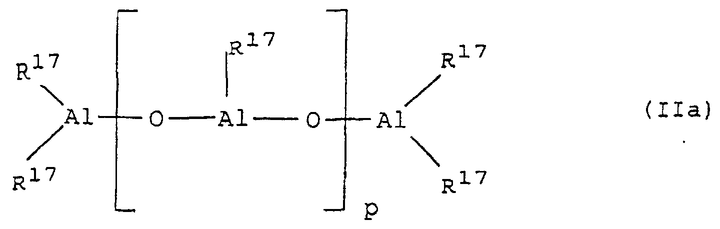 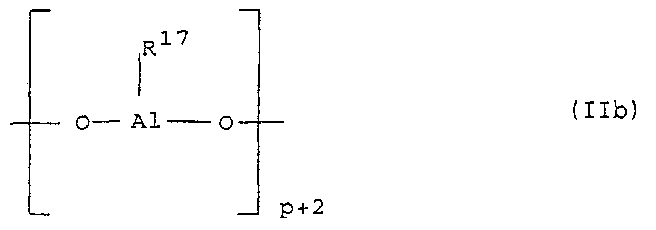 wobei in den Formeln IIa und IIb die Reste R¹⁷ gleich oder verschieden sein können und eine C₁-C₆-Alkylgruppe, eine C₆-C₁₈-Arylgruppe, Benzyl oder Wasserstoff bedeuten und p eine ganze Zahl von 2 bis 50, bevorzugt 10 bis 35 bedeutet.

4. Katalysatorsystem nach Anspruch 3, wobei die Reste R¹⁷ im Cokatalysator gleich sind und Methyl, Isobutyl, Phenyl oder Benzyl, bevorzugt Methyl bedeuten.

5. Katalysatorsystem nach Anspruch 3, wobei die Reste R¹⁷ im Cokatalysator verschieden sind und Methyl und Wasserstoff oder Methyl und Isobutyl, wobei Wasserstoff oder Isobutyl bevorzugt zu 0,01 - 40 % (Zahl der Reste R¹⁷) enthalten sind.

6. Katalysatorsystem nach einem oder mehreren der Ansprüche 3 bis 5, wobei ein Träger enthalten ist.

7. Katalysatorsystem nach einem oder mehreren der Ansprüche 3 bis 6, wobei ein Träger enthalten ist und das Katalysatorsystem vorpolymerisiert ist.

8. Verfahren zur Herstellung eines Copolymers durch Polymerisation von Propylen und mindestens eines Comonomers in Gegenwart eines Katalysatorsystems gemäß einem oder mehreren der Ansprüche 3 bis 7 bei einer Temperatur von 50 bis 200°C und bei einem Druck von 0,5 bis 100 bar.

9. Verfahren nach Anspruch 8, wobei Wasserstoff zugegeben wird.

10. Verfahren nach Anspruch 8 oder 9, wobei der Druck im Bereich von 5 bis 64 bar eingestellt wird.

11. Verfahren nach einem oder mehreren der Ansprüche 8 bis 10 , wobei die Katafysatorkomponente in einer Konzentration, bezogen auf das Übergangsmetall von 10⁻³ bis 10⁻⁸, vorzugsweise 10⁻⁴ bis 10⁻⁷ mol Übergangsmetall pro dm³ Reaktorvolumen und der Cokatalysator in einer Konzentration von 10⁻⁵ bis 10⁻¹ mol, vorzugsweise 10⁻⁴ bis 10⁻² mol pro dm³ Reaktorvolumen eingesetzt werden.

12. Verwendung mindestens einer Katalysatorkomponente gemäß Anspruch 1 oder 2 oder mindestens eines Katalysatorsystems gemäß einem oder mehreren der Ansprüche 3 bis 7 zur Herstellung von hochmolekularen Copolymeren.

## Claims

1. A catalyst component for preparing a high molecular weight copolymer having the formula I 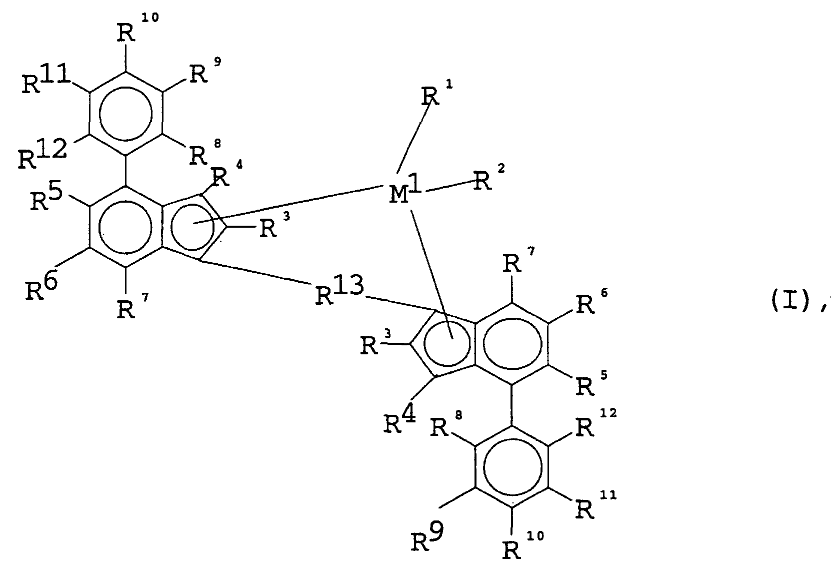 where
M¹ is a metal of group IVb, Vb or VIb of the Periodic Table,
R¹ and R² are identical and are each a C₁-C₄-alkyl group or a halogen atom,
the radicals R³ are identical or different and are each a C₁-C₄-alkyl group,
R⁴ and R⁷ are each hydrogen, R⁵ and R⁶ are different and are each a C₁-C₄-alkyl group or hydrogen, R⁸ to R¹² are identical or different and are as defined for R³ or are hydrogen or two or more adjacent radicals R⁸ to R¹² together with the atoms connecting them form one or more aromatic or aliphatic rings,
R¹³ 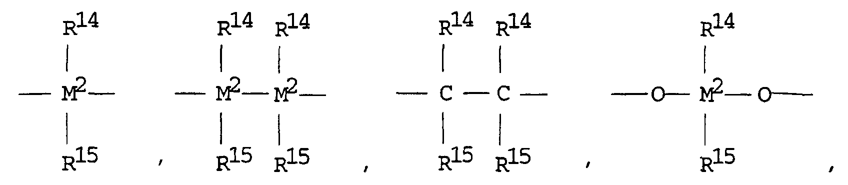 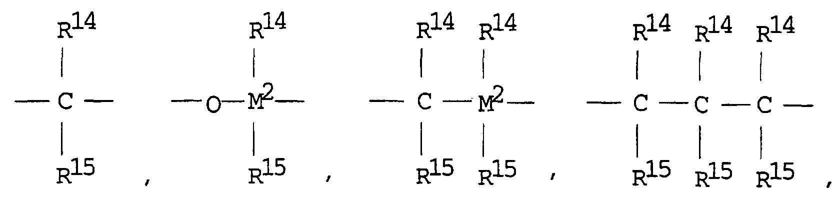 =BR¹⁴, =AlR¹⁴, -Ge-, -O-, -S-, =SO, =SO₂, =NR¹⁴, =CO, =PR¹⁴ or =P(O)R¹⁴, where R¹⁴ and R¹⁵ are identical or different and are each a hydrogen atom, a halogen atom, a C₁-C₁₀-, in particular C₁-C₄-alkyl group, a C₁-C₁₀-fluoroalkyl, in particular CF₃ group, a C₆-C₁₀-, in particular C₆-C₈-aryl group, a C₆-C₁₀-fluoroaryl, in particular pentafluorophenyl group, a C₁-C₁₀-, in particular C₁-C₄-alkoxy group, in particular a methoxy group, a C₂-C₁₀-, in particular C₂-C₄-alkenyl group, a C₇-C₄₀-, in particular C₇-C₁₀-arylalkyl group, a C₈-C₄₀-, in particular C₈-C₁₂-arylalkenyl group, a C₇-C₄₀-, in particular C₇-C₁₂-alkylaryl group or R¹⁴ and R¹⁵ together with the atoms connecting them form a ring and M² is silicon, germanium or tin.

2. A catalyst component as claimed in claim 1, in which M² is zirconium, R¹ and R² are identical and are each chlorine or a methyl group, the radicals R³ are identical and are each a methyl or ethyl group, at least two of the radicals R⁸, R⁹, R¹⁰, R¹¹ or R¹² are different from hydrogen and form at least one aromatic ring which is preferably 6-membered, or R⁵ and/or R⁶ are each a C₁-C₄-alkyl group when the radicals R⁸, R⁹, R¹⁰, R¹¹ or R¹² are hydrogen,
and R¹³ is 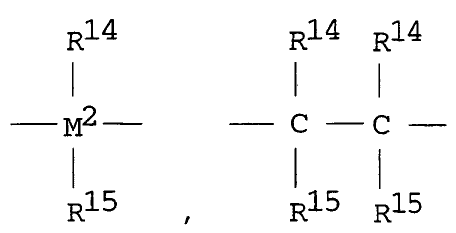 where M² is silicon and R¹⁴ and R¹⁵ are identical or different and are each a C₁-C₄-alkyl group or a C₆-C₁₀-aryl group.

3. A catalyst system for preparing a high molecular weight copolymer comprising at least one catalyst component as claimed in claim 1 or 2 and at least one cocatalyst, preferably an aluminoxane of the formula IIa and/or the formula IIb, 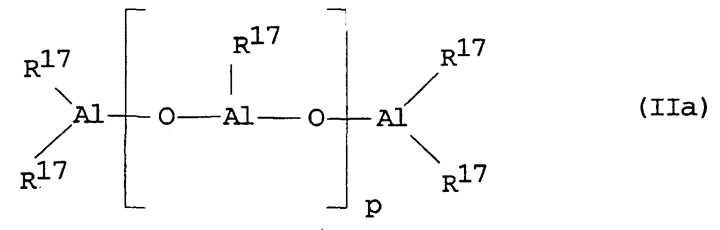 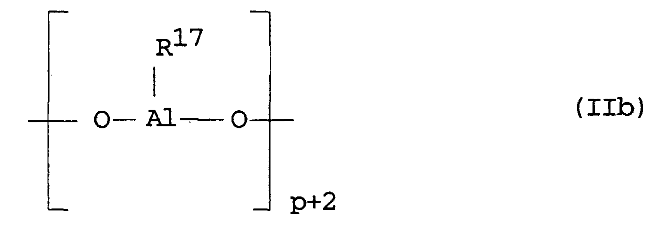 where, in the formulae IIa and IIb, the radicals R¹⁷ can be identical or different and are each a C₁-C₆-alkyl group, a C₆-C₁₈-aryl group, benzyl or hydrogen and p is an integer from 2 to 50, preferably from 10 to 35.

4. A catalyst system as claimed in claim 3, wherein the radicals R¹⁷ in the cocatalyst are identical and are methyl, isobutyl, phenyl or benzyl, preferably methyl.

5. A catalyst system as claimed in claim 3, wherein the radicals R¹⁷ in the cocatalyst are different and are methyl and hydrogen or methyl and isobutyl, with hydrogen or isobutyl preferably being present in an amount of up to 0.01 - 40% (number of the radicals R¹⁷).

6. A catalyst system as claimed in one or more of claims 3 to 5, wherein a support is present.

7. A catalyst system as claimed in one or more of claims 3 to 6, wherein a support is present and the catalyst system is prepolymerized.

8. A process for preparing a copolymer by polymerization of propylene and at least one comonomer in the presence of a catalyst system as claimed in one or more of claims 3 to 7 at a temperature of from 50 to 200°C and a pressure of from 0.5 to 100 bar.

9. The process as claimed in claim 8, wherein hydrogen is added.

10. The process as claimed in claim 8 or 9, wherein the pressure is set in the range from 5 to 64 bar.

11. The process as claimed in one or more of claims 8 to 10, wherein the catalyst component is used in a concentration, based on the transition metal, of from 10⁻³ to 10⁻⁸ mol, preferably from 10⁻⁴ to 10⁻⁷ mol, of transition metal per dm³ of reactor volume and the cocatalyst is used in a concentration of from 10⁻⁵ to 10⁻¹ mol, preferably from 10⁻⁴ to 10⁻² mol, per dm³ of reactor volume.

12. Use of at least one catalyst component as claimed in claim 1 or 2 or at least one catalyst system as claimed in one or more of claims 3 to 7 for preparing high molecular weight copolymers.

## Revendications

1. Composant de catalyseur pour la préparation d'un copolymère à haut poids moléculaire, répondant à la formule générale I 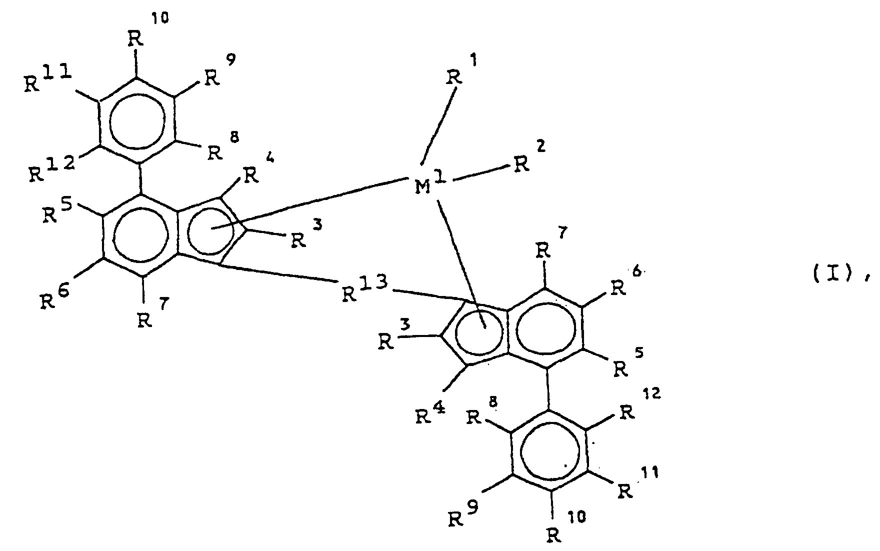 dans laquelle
M¹ représente un métal du groupe IVb, Vb ou VIb de la Classification périodique,
R¹ et R², ayant des significations identiques, représentent chacun un groupe alkyle en C1-C4 ou un atome d'halogène,
les symboles R³, ayant des significations identiques ou différentes, représentent chacun un groupe alkyle en C1-C4, R⁴ et R7 représentent l'hydrogène, R⁵ et R⁶ ont des significations différentes et représentent chacun un groupe alkyle en C1-C4 ou l'hydrogène, R8 à R¹² ont des significations identiques ou différentes parmi celles qui ont été indiquées pour R³, ou représentent l'hydrogène, ou bien deux ou plusieurs groupes voisins, parmi les groupes R⁸ à R¹², forment un ou plusieurs cycles aromatiques ou aliphatiques avec les atomes qui les relient,
R¹³ représente 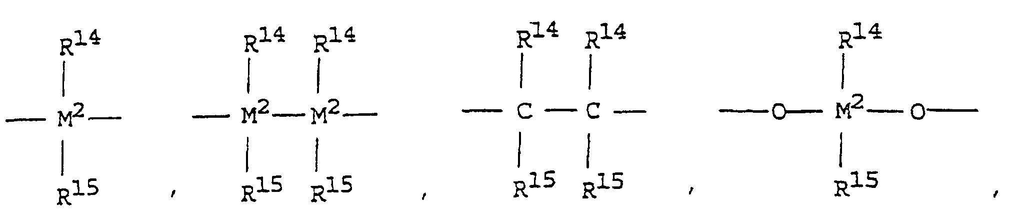 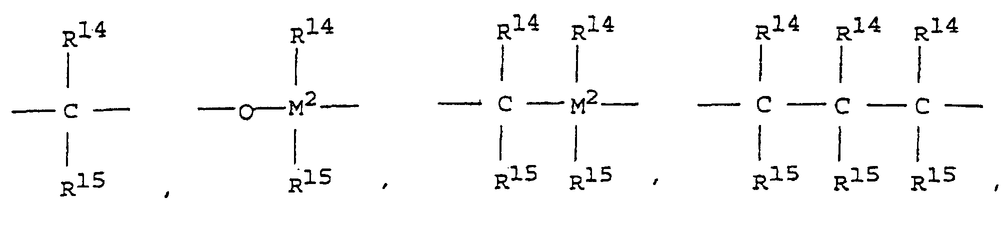 =BR¹⁴, =AR¹⁴, -Ge-, -O-, -S-, =SO, =SO₂, =NR¹⁴, =CO, =PR¹⁴ ou =P(O)R¹⁴, R¹⁴ et R¹⁵, ayant des significations identiques ou différentes représentant chacun un atome d'hydrogène, un atome d'halogène, un groupe alkyle en C1-C10, plus spécialement en C1-C4, un groupe fluoralkyle en C1-C10, plus spécialement un groupe CF₃, un groupe aryle en C6-C10, plus spécialement en C6-C8, un groupe fluoraryle en C6-C10, plus spécialement un groupe pentafluorophényle, un groupe alcoxy en C1-C10, plus spécialement en C1-C4, en particulier un groupe méthoxy, un groupe alcényle en C2-C10, plus spécialement en C2-C₄, un groupe arylalkyle en C7-C40, plus spécialement en C7-C10, un groupe arylalcényle en C8-C40, plus spécialement en C8-C12, un groupe alkylaryle en C7-C40, plus spécialement en C7-C12, ou bien R¹⁴ et R¹⁵ forment dans chaque cas un cycle avec les atomes qui les relient, et M² représente le silicium, le germanium ou l'étain.

2. Composant de catalyseur selon la revendication 1, pour lequel M² représente le zirconium, R¹ et R², ayant des significations identiques, représentent chacun le chlore ou un groupe méthyle, les symboles R³ ont des significations identiques et représentent chacun un groupe méthyle ou éthyle,
au moins deux des groupes R⁸, R⁹, R¹⁰, R¹¹ ou R¹² ont des significations autres que l'hydrogène et forment au moins un cycle aromatique, de préférence à six chaînons,
ou bien lorsque R⁸, R⁹, R¹⁰, R¹¹ ou R¹² représentent l'hydrogène, R⁵ et/ou R⁶ représentent un groupe alkyle en C1-C4,
et R¹³ représente 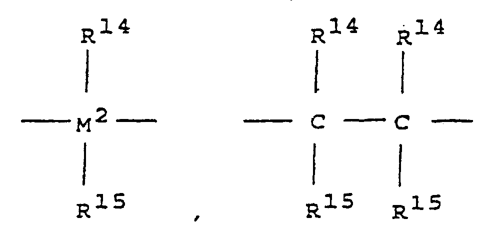 M² représentant le silicium et R¹⁴ et R¹⁵, ayant des significations identiques ou différentes, représentent chacun un groupe alkyle en C1-C4 ou aryle en C6-C10.

3. Système catalyseur pour la préparation d'un copolymère à haut poids moléculaire, contenant au moins un composant de catalyseur selon la revendication 1 ou 2 et au moins un catalyseur auxiliaire, de préférence un aluminoxane de formule IIa et/ou de formule IIb 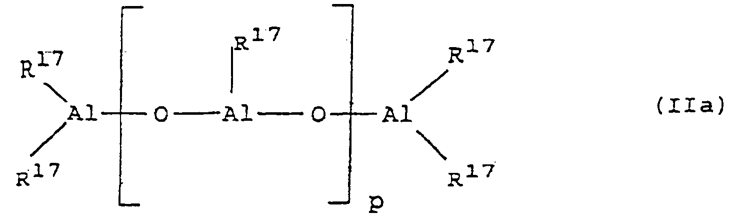 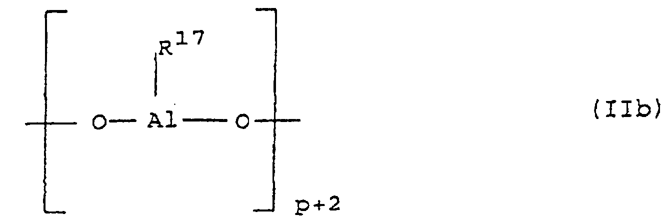 dans lesquelles les symboles R¹⁷, ayant des significations identiques ou différentes, représentent chacun un groupe alkyle en C1-C6, un groupe aryle en C6-C18, un groupe benzyle ou l'hydrogène et p est un nombre entier allant de 2 à 50, de préférence de 10 à 35.

4. Système catalyseur selon la revendication 3, pour lequel les symboles R¹⁷ de la formule du catalyseur auxiliaire ont des significations identiques et représentent chacun un groupe méthyle, isobutyle, phényle ou benzyle, de préférence méthyle.

5. Système catalyseur selon la revendication 3, pour lequel les symboles R¹⁷ de la formule du catalyseur auxiliaire ont des significations différentes et représentent respectivement un groupe méthyle et l'hydrogène ou un groupe méthyle et un groupe isobutyle, avec de préférence de 0,01 à 40 % (du nombre des symboles R¹⁷) qui consistent en hydrogène ou isobutyle.

6. Système catalyseur selon une ou plusieurs des revendications 3 à 5, contenant un support.

7. Système catalyseur selon une ou plusieurs des revendications 3 à 6, contenant un support qui a subi une polymérisation préalable.

8. Procédé pour préparer un copolymère par polymérisation du propylène et d'au moins un comonomère en présence d'un système catalyseur selon une ou plusieurs des revendications 3 à 7, à une température de 50 à 200°C et une pression de 0,5 à 100 bar.

9. Procédé selon la revendication 8, dans lequel on opère en présence d'hydrogène.

10. Procédé selon la revendication 8 ou 9 dans lequel on règle la pression dans l'intervalle de 5 à 64 bar.

11. Procédé selon une ou plusieurs des revendications 8 à 10 dans lequel le composant de catalyseur est mis en oeuvre à une concentration, exprimée en le métal de transition, de 10⁻³ à 10⁻⁸, de préférence de 10⁻⁴ à 10⁻⁷ mol du métal de transition par dm³ du volume du réacteur et le catalyseur auxiliaire a une concentration de 10⁻⁵ à 10⁻¹ mol, de préférence de 10⁻⁴ à 10⁻² mol par dm³ du volume du réacteur.

12. Utilisation d'au moins un composant de catalyseur selon la revendication 1 ou 2 ou d'au moins un système catalyseur selon une ou plusieurs des revendications 3 à 7 pour la préparation de copolymères à haut poids moléculaire.
